# EUROPEAN PATENT SPECIFICATION

(11) **EP 2 551 051 B1**
(45) Date of publication and mention of the grant of the patent: **25.09.2019**
(21) Application number: 11814307.2
(22) Date of filing: 04.08.2011
(51) Int. Cl.: B23P 15/00, B21J 13/02, B21J 5/12, B23G 1/32, F16H 25/22, F16H 25/24, B21K 3/00

(54) **METHOD FOR MANUFACTURING BALL SCREW NUT**
VERFAHREN ZUR HERSTELLUNG EINER KUGELSCHRAUBENMUTTER
PROCÉDÉ DE FABRICATION D'ÉCROU DE VIS À BILLES

(30) Priority: 20.05.2011 JP 2011113099; 16.02.2011 JP 2011030437; 18.11.2010 JP 2010257889; 27.08.2010 JP 2010190947; 25.08.2010 JP 2010188735; 04.08.2010 JP 2010175802
(43) Date of publication of application: 30.01.2013
(73) Proprietor: NSK Ltd., Tokyo 141-8560 (JP)
(72) Inventor: YOKOYAMA, Shouji, Hanyu-shi Saitama 348-8506 (JP); SAITOU, Shingo, Fujisawa-shi Kanagawa 251-8501 (JP); WATANABE, Atsushi, Fujisawa-shi Kanagawa 251-8501 (JP); HASHIMOTO, Koji, Fujisawa-shi Kanagawa 251-8501 (JP)
(74) Representative: Klingseisen, Franz
(86) International application number: PCT/JP2011/004445
(87) International publication number: WO 2012/017672

(56) References cited:
- JP-A- 2004 243 453
- JP-A- 2007 092 968
- JP-A- 2007 092 968
- JP-A- 2008 281 063
- JP-A- 2008 281 063
- JP-U- H 063 524
- US-A1- 2007 209 465

## Description

### Technical Field

The present invention relates to methods of production of a nut for ball screw use according to the preambles of claims 1, 11, 13 and 14.

### Background Art

A ball screw is a device which is provided with a nut which is formed with a spiral groove in its inner circumferential surface, a threaded shaft which is formed with a spiral groove in its outer circumferential surface, balls which are arranged in a raceway which is formed by the spiral groove of the nut and the spiral groove of the threaded shaft, and a ball return channel by which balls are returned from an end point of the raceway to a starting point, wherein the balls rolling inside the raceway enable the nut to move relative to the threaded shaft.

Such a ball screw is used not only as a positioning device of a general industrial machine etc., but also as an electric actuator which is mounted in an automobile, motorcycle, boat, or other vehicle.

Ball return channels of ball screws include recirculation tube types, deflector types, etc. In the case of the deflector type, a deflector in which a concave part which forms a ball return channel is mated with a through hole of a nut. As opposed to this, if the concave part which forms the ball return channel (ball recirculation groove) is directly formed in the inner circumferential surface of the nut, the trouble and cost of assembly can be reduced and an improvement in the reliability of ball recirculation can be expected.

Patent Documents 1 to 3 describe a ball screw in which a ball recirculation groove is directly formed in the inner circumferential surface of the nut. Specifically, the nut member of the ball screw does not have split surfaces in the circumferential direction and is formed integrally by cutting or forging. Further, it is described that the inner circumferential surface of the nut member is formed with a long S-shaped recirculation channel (ball recirculation groove) which has a part deeper than the female screw groove (ball rolling groove) (sticking outward in the radial direction) and that the two ends of the female screw groove are smoothly connected. However, specifically how the female screw groove and recirculation channel are formed is not described.

Further, Patent Document 4 describes, as a method of production of a nut member which is described in Patent Document 3, a method comprised of a first plastic working step which forms a recirculation groove (ball recirculation groove) in a cylindrical blank and a second working step which forms a female screw groove (ball rolling groove) in the cylindrical blank which is formed with the recirculation groove, wherein in the first plastic working step, a phase reference mark for use in the second working step is formed in the nut member. Specifically, in the first plastic working step, at the same time as the formation of the recirculation groove, as the phase reference mark, a concave part of an arcuate groove shape is formed at the inner circumferential surface of one end of the nut member in the axial direction (side where flange is formed).

Furthermore, Patent Document 5 describes directly forming a recirculation groove (ball recirculation groove) in the inner circumferential surface of the nut blank by plastic working, then cutting a female screw groove (ball rolling groove). It is described that the female screw groove is cut by aligning the axial direction position and phase with the recirculation groove and making a tool which has a cutting edge of a shape which corresponds to the female screw groove rotate and revolve. However, it does not describe specifically how to align the axial direction position and phase with the recirculation groove when cutting a female screw groove.

Furthermore, Patent Document 6 describes a "screw device" which has a ball recirculation channel, which is comprised of a spiral load ball rolling groove and a ball recirculation groove which connects one end and the other end of the same, formed at an inner circumferential surface of a nut. As the method of formation of the ball recirculation channel, it is described that fabrication is possible by the technique of forming an internal groove called an "internal cam".

### Citations List

### Patent Document

Patent Document 1: JP 1994-147290 A
Patent Document 2: JP 2000-297854 A
Patent Document 3: JP 2003-307263 A
Patent Document 4: JP 2007-92968 A
Patent Document 5: JP 2008-281063 A
Patent Document 6: JP 2005-321059 A

Patent Document 4 discloses the features of the preambles of claims 1, 11, 13 and 14.

### Summary of Invention

### Problem to be Solved

As explained above, it has already been proposed to form a ball recirculation groove by plastic working in the inner circumferential surface of a cylindrical blank which was fabricated from a nut blank and to cut a ball rolling groove so as to connect the two ends of this ball recirculation groove and thereby fabricate a nut which is formed with a ball recirculation groove and a ball rolling groove at the inner circumferential surface. However, no specific method which is able to prevent the ball recirculation groove and the ball rolling groove from being formed in the state deviated in the axial direction, circumferential direction, and radial direction of the nut has ever been proposed.

Further, when producing a nut of a ball screw of Patent Document 1 which uses a concave part as a ball recirculation groove, the inner circumferential surface of the nut is formed with the concave part which forms the ball recirculation groove, then is formed with the screw groove which forms the ball rolling groove, so working error at the time of forming the screw groove is liable to cause the positions of formation of the end parts of the screw groove to deviate from the correct positions. This being the case, the end parts of the screw groove and the end parts of the concave part do not accurately match and step differences occur at the connecting parts of the two grooves.

In particular, if the ball recirculation groove and the ball rolling groove are formed deviated in the axial direction of the nut, step differences occur at the connecting parts of the two grooves and smooth movement of the balls is obstructed. As a result, a drop in durability, a drop in the ball recirculation efficiency, abnormal operating noise, and other problems arise, so it is necessary to prevent this.

The published Japanese patent application JP 2007 092968 A discloses a manufacturing method for a nut of a ball screw device having a circulation groove for the balls and a recirculation groove. The method includes a first machining process step, in which the female screw grooves are formed in the raw material, and a second machining process step, in which the circulation grooves and the female screw grooves are produced with high precision at low costs. In the first plastic working step of this prior art, a phase reference mark for use in the second processing step is formed in the nut of the ball screw device.

The problem of this invention is to provide a method of producing a nut for ball screw use where a ball rolling groove which forms a raceway for rolling of balls together with a spiral groove of a threaded shaft and a ball recirculation groove which returns balls from an end point of the raceway to a starting point are formed at an inner circumferential surface wherein it is possible to prevent the ball recirculation groove and ball rolling groove from being formed in a state deviated in the axial direction, circumferential direction, and radial direction of the nut.

### Solution to the Problem

This problem is solved by means of a method of production of a nut for ball screw use according to the features of claim 1, claim 11, claim 13, and claim 14. Preferred forms of realization of the invention are defined in the dependent claims.

According to a first aspect of the present invention, there is provided a method of production of a nut for ball screw use which produces a nut for ball screw use which is formed at its inner circumferential surface with a ball rolling groove which forms a raceway through which balls are made to roll together with a spiral groove of a threaded shaft and with a ball recirculation groove which returns balls from an end point of the raceway to a starting point, the method including:
a blank forming step which forms a tubular blank from a nut blank,
a recirculation groove forming step which forms the ball recirculation groove at the inner circumferential surface of the blank, and
a rolling groove forming step which forms the ball rolling groove at an inner circumferential surface of the blank, wherein
the method forms a working reference by a step before the rolling groove forming step and uses a holding member at which the working reference can be set so as to perform the rolling groove forming step after the recirculation groove forming step, characterized in that
the working reference includes a phase reference, axial direction reference, and radial direction reference which are formed by the blank forming step and are used in common in the recirculation groove forming step and the rolling groove forming step, and in that
in the blank forming step, forming the phase reference at an end face or outer circumferential surface of the blank, continuously finishing the inner circumferential surface and one end face in the axial direction of the blank and an outer circumferential surface which continues from this one end face in the axial direction, using the one end face in the axial direction as the axial direction reference, and using the outer circumferential surface as the radial direction reference.

In the method of production of a nut for ball screw use according to the first aspect, the ball recirculation groove is preferably formed in the recirculation groove forming step by plastic working.

In the method of production of a nut for ball screw use according to the first aspect, a die which is provided with a cam mechanism is preferably used to perform the plastic working.

In the method of production of a nut for ball screw use according to the first aspect, the blank preferably has a flange at one end in the axial direction and by, in the blank forming step, the phase reference is preferably formed at an end face or outer circumferential surface of the flange.

In the method of production of a nut for ball screw use according to the first aspect, a step of forming chamfered parts at the two ends of the inner circumferential surface of the blank in the axial direction is preferably performed in the state of holding the blank by the holding members which perform the rolling groove forming step.

In the method of production of a nut for ball screw use according to the first aspect, after finishing the chamfered parts, the outer circumferential surface of the blank is preferably finished by using such finished chamfered parts as a reference.

In the method of production of a nut for ball screw use according to the first aspect, the rolling groove forming step preferably uses a portion not including the portion which forms the ball recirculation groove in the portion provided in the axial direction across the two ends of the blank in the axial direction as the phase reference, fastens the blank in which the ball recirculation groove is formed at a groove forming machine, and uses the groove forming machine to form the ball rolling groove at the inner circumferential surface of the blank.

In the method of production of a nut for ball screw use according to the first aspect, an intermediate portion in the axial direction of the outer circumferential surface of the portion used as the phase reference is preferably used as the radial direction reference to fasten the blank in which the ball recirculation groove has been formed at the groove forming machine.

In the method of production of a nut for ball screw use according to the first aspect, an end face of the blank which forms an end part in the axial direction of the portion used as the phase reference is preferably used as the axial direction reference to fasten the blank in which the ball recirculation groove has been formed at the groove forming machine.

In the method of production of a nut for ball screw use according to the first aspect, the phase reference is preferably formed at an end face of the blank and is preferably made a shape which mates with a member at the groove forming machine side.

According to second first aspect of the present invention, there is provided a method of production of a nut for ball screw use which produces a nut for ball screw use which is formed at its inner circumferential surface with a ball rolling groove which forms a raceway through which balls are made to roll together with a spiral groove of a threaded shaft and with a ball recirculation groove which returns balls from an end point of the raceway to a starting point, the method including:
a blank forming step which forms a tubular blank from a nut blank,
a recirculation groove forming step which forms the ball recirculation groove at the inner circumferential surface of the blank, and
a rolling groove forming step which forms the ball rolling groove at an inner circumferential surface of the blank, wherein
the method forms a working reference by a step before the rolling groove forming step and uses a holding member at which the working reference can be set so as to perform the rolling groove forming step after the recirculation groove forming step,
after the recirculation groove forming step, performing a recirculation groove position identifying step which identifies an axial direction position of the ball recirculation groove with respect to a machining origin for formation of the ball rolling groove in the rolling groove forming step and using the axial direction position of the ball recirculation groove as the basis to form the ball rolling groove of the rolling groove forming step from that position, and
the recirculation groove position identifying step includes a first reference plane forming step which uses a chuck device to directly grip at least the ball recirculation groove and, in that state, cuts the end face in the axial direction of the worked object of the blank to form a first working reference plane for determining an axial direction end face position of the worked object with respect to the ball recirculation groove and uses the position of the ball recirculation groove at the chuck device and the position of the first working reference plane at the chuck device when making the first working reference plane abut against a fixture reference plane as the basis to identify the position of the ball recirculation groove with respect to the fixture reference plane.

In the method of production of a nut for ball screw use according to the second aspect, the recirculation groove position identifying step preferably includes, after the first reference plane forming step, a second reference plane forming step which uses the chuck device to directly grip at least the ball recirculation groove and, in that state, cuts the outer circumferential surface of the worked object to form a second working reference plane which is coaxial with a PCD center of the ball recirculation groove, uses the position of the ball recirculation groove in the chuck device when making the first working reference plane abut against the fixture reference plane and the position of the second working reference plane as the basis to identify the position of the ball recirculation groove with respect to the second working reference plane, and forms the ball rolling groove of the rolling groove forming step from that position.

According to third aspect of the present invention, there is provided a method of production of a nut for ball screw use which produces a nut for ball screw use which is formed at its inner circumferential surface with a ball rolling groove which forms a raceway through which balls are made to roll together with a spiral groove of a threaded shaft and with a ball recirculation groove which returns balls from an end point of the raceway to a starting point, the method including:
a blank forming step which forms a tubular blank from a nut blank,
a recirculation groove forming step which forms the ball recirculation groove at the inner circumferential surface of the blank, and
a rolling groove forming step which forms the ball rolling groove at an inner circumferential surface of the blank, wherein
the method forms a working reference by a step before the rolling groove forming step and uses a holding member at which the working reference can be set so as to perform the rolling groove forming step after the recirculation groove forming step,
after the recirculation groove forming step, performing a recirculation groove position identifying step which identifies an axial direction position of the ball recirculation groove with respect to a machining origin for formation of the ball rolling groove in the rolling groove forming step and using the axial direction position of the ball recirculation groove as the basis to form the ball rolling groove of the rolling groove forming step from that position, and
the recirculation groove position identifying step is a step which uses a chuck device of a conveyor system which conveys a worked object of the blank to directly grip at least the ball recirculation groove and, in that state, positions the worked object so that the ball recirculation groove becomes a predetermined position with respect to the machining origin.

According to fourth aspect of the present invention, there is provided a method of production of a nut for ball screw use which produces a nut for ball screw use which is formed at its inner circumferential surface with a ball rolling groove which forms a raceway through which balls are made to roll together with a spiral groove of a threaded shaft and with a ball recirculation groove which returns balls from an end point of the raceway to a starting point, the method including:
a blank forming step which forms a tubular blank from a nut blank,
a recirculation groove forming step which forms the ball recirculation groove at the inner circumferential surface of the blank, and
a rolling groove forming step which forms the ball rolling groove at an inner circumferential surface of the blank, wherein
the method forms a working reference by a step before the rolling groove forming step and uses a holding member at which the working reference can be set so as to perform the rolling groove forming step after the recirculation groove forming step, and
the rolling groove forming step is a step which cuts an inner circumferential surface of the blank using a cutting tool to thereby form the ball rolling groove and
includes a working position correction step which measures a position of the ball recirculation groove using an axial direction end face of the blank as an axial direction reference before the rolling groove forming step and which uses the results of measurement as the basis to correct a working position of the cutting tool.

The method of production of a nut for ball screw use according to fourth aspect preferably includes a working reference plane forming step which cuts an axial direction end face of the blank to as to be perpendicular to a central axis of the inner circumferential surface to form a working reference plane.

In the method of production of a nut for ball screw use according to fourth aspect, the working references is preferably formed at the recirculation groove forming step simultaneously with the ball recirculation groove by plastic working.

### Advantageous Effects of Invention

According to the method of production of a nut for ball screw use according to the present invention, there is provided a method of producing a nut for ball screw use where a ball rolling groove which forms a raceway for rolling of balls together with a spiral groove of a threaded shaft and a ball recirculation groove which returns balls from an end point of the raceway to a starting point are formed at an inner circumferential surface wherein it is possible to prevent the ball recirculation groove and ball rolling groove from being formed in a state deviated in the axial direction, circumferential direction, and radial direction of the nut.

Further, the ball screw is formed with a ball rolling groove of a nut at a position which is determined based on working references which are provided at predetermined position with respect to the ball recirculation groove, so the position of formation of the ball rolling groove with respect to the ball recirculation groove is accurate and high in precision.

### Brief Description of the Drawings

FIG. 1 is a cross-sectional view of a ball screw according to a first embodiment of the present invention.
FIG. 2 is a cross-sectional view of principal parts of a nut.
FIG. 3 is an enlarged cross-sectional view of a ball recirculation channel.
FIG. 4 is a perspective view which shows a blank after formation of a phase reference in a blank forming step of a method of production of a nut for ball screw use according to a first embodiment of the present invention.
FIG. 5 is a cross-sectional view which shows a working method which forms an axial direction reference and a radial direction reference in the blank of FIG. 4 in the blank forming step of the first embodiment.
FIGS. 6A and 6B are views which explain two examples of the recirculation groove forming step of the first embodiment.
FIGS. 7A and 7B are views which explain the rolling groove forming step of the first embodiment.
FIGS. 8A to 8C are views which explain deviation between a ball recirculation groove and ball rolling groove in different directions, wherein 8A shows deviation in the axial direction of the nut, 8B shows deviation in the circumferential direction, and 8C shows deviation in the radial direction.
FIGS. 9A to 9E are perspective views which show an example other than FIG. 4 of the blank after a phase reference is formed in the blank forming step.
FIG. 10 is a view which shows a recirculation groove forming step in a method of production of a nut for ball screw use of a second embodiment.
FIG. 11 is a perspective view which shows a rolling groove forming step in the method of production of a nut for ball screw use of the second embodiment.
FIG. 12 is a cross-sectional view which shows a rolling groove forming step in the method of production of a nut for ball screw use of the second embodiment.
FIG. 13 is a perspective view which shows a shape of a nut blank in which a rolling groove is formed in the rolling groove forming step.
FIG. 14 is a perspective view which shows another shape of a nut blank in which a rolling groove is formed in the rolling groove forming step.
FIG. 15 is a plan view of a nut blank which shows gripping positions of three clamps.
FIG. 16 is a cross-sectional view of a nut blank which shows gripping positions of three clamps.
FIGS. 17A and 17B are cross-sectional views which show cutting of a rolling groove which is performed in the rolling groove forming step.
FIGS. 18A to 18C are cross-sectional views of a nut blank which show a modified mode.
FIG. 19 is a perspective view which shows a rolling groove forming step in a modification of a method of production of a nut for ball screw use of a second embodiment.
FIG. 20 is a plan view which shows a rolling groove forming step in the modification of the method of production of a nut for ball screw use of the second embodiment.
FIGS. 21A and 21B are views which show the case of gripping an inner circumferential surface of a nut blank by clamps.
FIG. 22 is a perspective view which shows an example of cutting of a nut blank which is gripped at its inner circumferential surface by clamps.
FIGS. 23A to 23C are views which explain a recirculation groove forming step which forms a recirculation groove in a nut blank (nut) and a rolling groove forming step which forms a rolling groove in the nut blank after that.
FIGS. 24A and 24B are views which show a nut blank in which deformation in the radial direction and end face direction has occurred at a portion forming the same phase as the recirculation groove in the circumferential direction.
FIGS. 25A and 25B are views which show deviation of a rolling groove in the axial direction and radial direction.
FIG. 26 is a flow chart which shows a first example of a method of production of a nut for ball screw use of a third embodiment.
FIGS. 27A to 27D are views which show the first example of the method of production of a nut for ball screw use of the third embodiment, wherein 27A is a perspective view which shows an outline of a nut on which the recirculation groove forming step is performed and a chuck device, 27B is a perspective view which shows a first reference plane forming step,27C is a cross-sectional view which shows the first reference plane, and 27D is a cross-sectional view which shows the recirculation groove forming step.
FIGS. 28A and 28B are views which show a second example of the method of production of a nut for ball screw use of the third embodiment, wherein 28A is a perspective view which shows the state of conveyance and 28B is a cross-sectional view which shows a chucked state of a worked object by a processing machine.
FIGS. 29A to 29D are views which show a third example of the method of production of a nut for ball screw use of the third embodiment, wherein 29A is a cross-sectional view which shows an outline of a nut on which the recirculation groove forming step is performed, 29B is a cross-sectional view which shows a first reference plane, 29C is a cross-sectional view which shows a working position correction step, and 29D is a cross-sectional view which shows a rolling groove forming step.
FIGS. 30A to 30D are views which show a modification of the third example of the method of production of a nut for ball screw use of the third embodiment, wherein 30A is a cross-sectional view which shows an outline of a nut on which the recirculation groove forming step is performed, 30B is a cross-sectional view which shows a working position correction step, 30C is a cross-sectional view which shows a first reference plane, and 30D is a cross-sectional view which shows a rolling groove forming step.
FIGS. 31A to 31D are views which show a fourth example of the method of production of a nut for ball screw use of the third embodiment, wherein 31A is a perspective view which shows an outline of a nut on which the recirculation groove forming step is performed and a chuck device, 31B is a perspective view which shows a second reference plane forming step, 31C is a cross-sectional view which shows a first reference plane, and 31D is a cross-sectional view which shows a recirculation groove forming step.
FIG. 32 is a flow chart which shows a method of production of a nut for ball screw use of a fourth embodiment.
FIGS. 33A to 33D are views which show the method of production of a nut for ball screw use of the fourth embodiment, wherein 33A is a cross-sectional view which shows an outline of a nut on which the recirculation groove forming step is performed, 33B is a cross-sectional view which shows an end face which forms a reference, 33C is a cross-sectional view which shows a working position correction step, and 33D is a cross-sectional view which shows a rolling groove forming step.
FIGS. 34A to 34D are views which show a modification of the method of production of a nut for ball screw use of the fourth embodiment, wherein 34A is a cross-sectional view which shows an outline of a nut on which the recirculation groove forming step is performed, 34B is a cross-sectional view which shows a working position correction step, 34C is a cross-sectional view which shows an end face which forms a reference, and 34D is a cross-sectional view which shows a rolling groove forming step.
FIGS. 35A to 35C are views which show a modification of the method of production of a nut for ball screw use of the fourth embodiment, wherein 35A is a perspective view which shows an outline of a nut on which the recirculation groove forming step is performed and a chuck device, 35B is a perspective view which shows a working reference plane forming step, and 35C is a cross-sectional view which shows a working reference plane.

### Description of Embodiments

Embodiments of the method of production of a nut for ball screw use and a ball screw according to the present invention will be explained in detail with reference to the drawings.

### [First Embodiment]

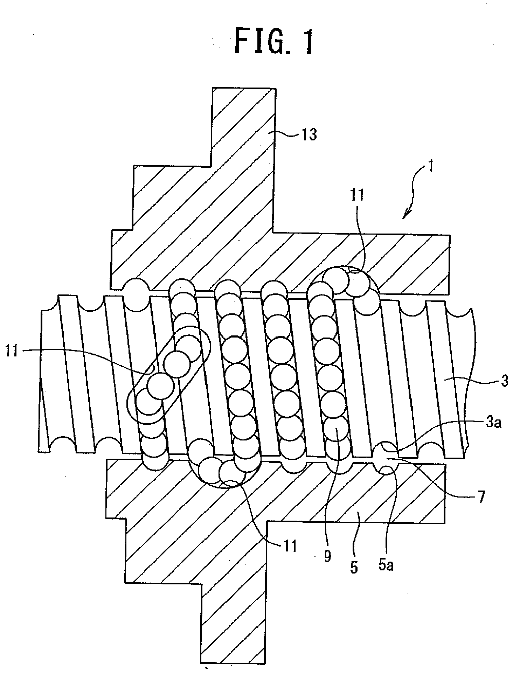

FIG. 1 is a cross-sectional view of a ball screw according to a first embodiment of the present invention (cross-sectional view which is cut along plane along axial direction).

As shown in FIG. 1, the ball screw 1 is provided with a threaded shaft 3 which has a spiral screw groove 3a (corresponding to spiral groove of constituent requirement of present invention) at its outer circumferential surface, a nut 5 which has a spiral screw groove 5a which faces the screw groove 3a of the threaded shaft 3 (corresponding to ball rolling groove of constituent requirement of present invention) at its inner circumferential surface, a plurality of balls 9 which are loaded rollably inside of a spiral ball rolling channel 7 which is formed by the two screw grooves 3a and 5a (corresponding to raceway of constituent requirement of present invention), and ball recirculation channels 11 each of which returns the balls 9 from an end point of the ball rolling channel 7 to a starting point for recirculation.

That is, the balls 9 move through the inside of the ball rolling channel 7 while circulating through the threaded shaft 3 to reach an end point of the ball rolling channel 7 where they are scooped up at one end part of a ball recirculation channel 11, pass through the inside of the ball recirculation channel 11, and are returned from the other end part of the ball recirculation channel 11 to a starting point of the ball rolling channel 7.

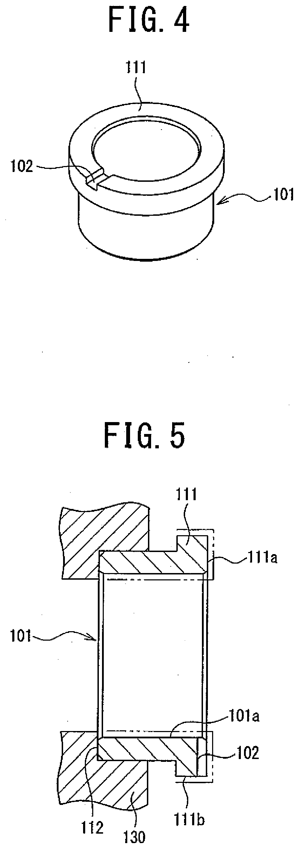

Note that, the blanks of the threaded shaft 3, nut 5, and balls 9 are not particularly limited. A general material can be used. For example, a metal (copper etc.), sintered alloy, ceramic, or resin may be mentioned. Further, the cross-sectional shapes of the screw grooves 3a and 5a may be arcuate shapes or gothic arc shapes. Furthermore, the shape of the nut 5 is not limited to a cylindrical shape. The outer circumferential surface of the nut 5 may also be a prism shape. Further, the inner circumferential surface of the nut 5 does not have to be a columnar surface. Furthermore, the shape of the flange 13 is not particularly limited. For example, it may also be a flange of a shape such as shown in the later explained FIG. 4 or need not have a flange.

Such a ball screw 1 is designed so that if the nut 5 which is screwed onto the threaded shaft 3 via the balls 9 and the threaded shaft 3 are made to rotate relative to each other, due to rolling of the balls 9, the threaded shaft 3 and the nut 5 move relative to each other in the axial direction. Further, the ball rolling channel 7 and the ball recirculation channels 11 are used to form an endless ball passage. The balls 9 which roll inside the ball rolling channel 7 are endlessly recirculated inside of the endless ball passage, so the threaded shaft 3 and the nut 5 can continuously move relative to each other.

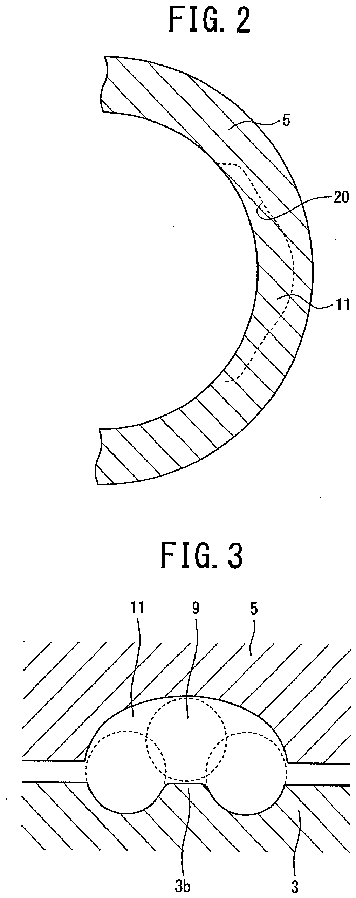

Here, the ball recirculation channels 11 will be explained in detail while referring to the cross-sectional views of FIGS. 2 and 3 (cross-sectional views cut along planes perpendicular to axial direction) . The ball recirculation channels 11 are integrally formed at the inner circumferential surface of the nut 5. Explained in detail, parts of the inner circumferential surface of the columnar surface shape of the nut 5 are plastic worked or cut to depress them and form concave grooves 20 (corresponding to ball recirculation grooves of constituent requirement of present invention) which are used as the ball recirculation channels 11. Accordingly, unlike the case of the tube type, deflector type, or other such ball recirculation system, no separate members are attached for forming the ball recirculation channels.

As shown in FIG. 3, the balls 9 which have rolled to an end point of the ball rolling channel 7 are scooped up at one end part of a ball recirculation channel 11 and sink into the inside of the nut 5 (outward side in radial direction). Further, they pass through the inside of the ball recirculation channel 11, ride over the land part 3b of the threaded shaft 3 (thread of screw groove 3a), and are returned from the other end part of the ball recirculation channel 11 to a starting point of the ball rolling channel 7. Note that, the cross-sectional shape of the ball recirculation channel 11 may be an arcuate shape or a gothic arc shape.

Next, the screw groove 5a of the nut 5 will be explained in detail. The screw groove 5a of the nut 5 is formed at a position which is determined based on working reference points which are provided at predetermined positions with respect to the ball recirculation channels 11.

The screw groove 5a of the nut 5 is formed at a position which is determined based on working reference points which are provided at predetermined positions with respect to the ball recirculation channels 11, so the position of formation of the screw groove 5a with respect to the ball recirculation channels 11 is accurate, there is no deviation between the end parts of the ball recirculation channels 11 and the end parts of the screw groove 5a of the nut 5, and almost no step differences are formed at the connecting parts of the two. Accordingly, the ball screw 1 of the present embodiment is high in precision.

The applications of the ball screw 1 of the present embodiment are not particularly limited, but this is suitable as a ball screw which is built into an electric hydraulic device, shaft actuator, etc.

Here, the method of production of the nut 5 of the ball screw 1 of the present embodiment will be explained with reference to an example.

### <Blank Forming Step>

In this embodiment, first, a cylindrical member which has a flange at one end in the axial direction is fabricated from a nut blank made of a ferrous metal with the usual precision. One location of the flange in the circumferential direction of the end face is formed with a concave part by cutting or plastic working. Due to this, a blank 101 as shown in FIG. 4 where one location of the end face of the flange 111 in the circumferential direction is formed with a key groove shaped concave part (phase reference) 102 which extends in the radial direction is obtained.

Next, as shown in FIG. 5, a chuck 130 is used to hold the end face 112 of this blank 101 at the opposite side to the flange 111 and half of the outer circumferential surface in the axial direction at the end face 112 side, then the inner circumferential surface 101a of the blank 101 and the end face 111a and outer circumferential surface 111b of the flange 111 are continuously cut or ground (without the blank 101 being removed from the chuck 130). Due to this, the coaxiality of the inner circumferential surface 101a of the blank 101 and the outer circumferential surface 111b of the flange 111 can be made small (for example, 0.01 mm or less). Further, the perpendicularity of the end face 111a of the flange 111 with respect to the inner circumferential surface 101a of the blank 101 can be reduced.

In this way, a blank 101 is obtained where the concave part 102 is the phase reference, the end face 111a of the flange 111 is the axial direction reference plane, and the outer circumferential surface 111b of the flange 111 is the radial direction reference. Note that, the phase reference constituted by the concave part 102 may also be formed continuously along with working the inner circumferential surface 101a and the end face 111a and the outer circumferential surface 111b of the flange 111 which are shown in FIG. 5.

### <Recirculation Groove Forming Step>

Next, using the concave part 102 as the phase reference, the end face 111a of the flange 111 as the axial direction reference, and the outer circumferential surface 111b of the flange 111 as the radial direction reference, ball recirculation grooves 103 are formed in the inner circumferential surface 101a of the blank 101 by plastic working.

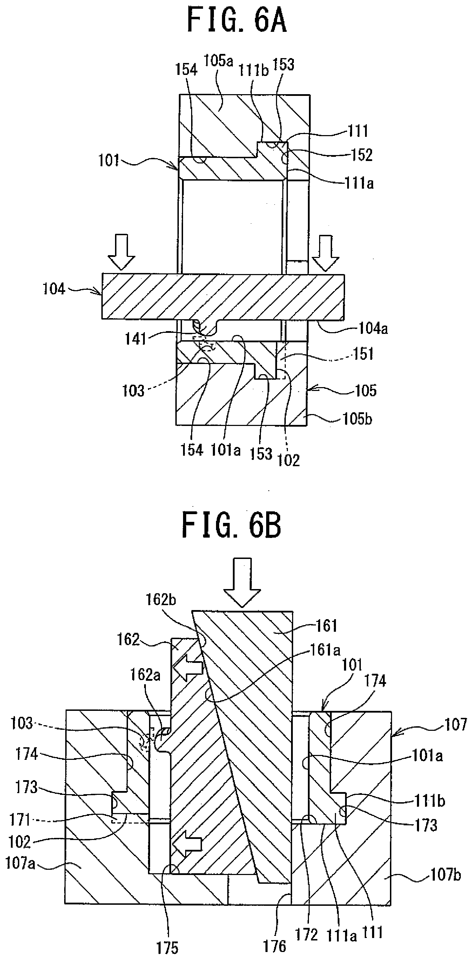

The ball recirculation grooves 103 are formed, for example, by the method which is shown in FIG. 6A or 6B.

In the method of FIG. 6A, a die which is provided with a working head 104 which has an outer circumferential surface 104a which corresponds to the inner circumferential surface 101a of the blank 101 and a holding member 105 which holds the blank 101 is used. The outer circumferential surface 104a of the working head 104 is formed with S-shaped convex parts 141 which correspond to the shapes of the ball recirculation grooves 103.

The holding member 105 is comprised of split members 105a and 105b which are split across the vertical direction. The lower side split member 105b is formed with a convex part 151 which mates with a concave part 102 of the blank 101. The two split members 105a and 105b are formed with an end face 152 which receives an end face 111a of the flange 111, a large diameter inner circumferential surface 153 which receives an outer circumferential surface 111b of the flange 111, and a small diameter inner circumferential surface 154 which receives the outer circumferential surface of the blank 101 other than the flange 111. The convex part 151 of the holding member 105 is a phase (circumferential direction) reference setting part, the end face 152 is the axial direction reference setting part, and the large diameter inner circumferential surface 153 is the radial direction reference setting part.

Further, first, the blank 101 is arranged on the lower side split member 105b of the holding member 105 with its axial direction oriented in the horizontal direction. At this time, the concave part 102 of the flange 111 is mated with the convex part 151 of the lower side split member 105b for positioning in the circumferential direction. Next, the upper side split member 105a is mated with the upper side half of the blank 101. Due to this, the blank 101 is positioned in the radial direction by contact of the outer circumferential surface 111b of the flange 111 and the large diameter inner circumferential surface 153 of the holding member 105. Further, the blank 101 is positioned in the axial direction by contact of the end face 111a of the flange 111 and the end face 152 of the holding member 105.

Next, the working head 104 is arranged inside the blank 101, pressure is applied to the working head 104 to make it descend, and the convex parts 141 are pressed against the inner circumferential surface 101a of the blank 101 to make the inner circumferential surface 101a plastically deform, whereby S-shaped ball recirculation grooves 103 are formed.

In the method of FIG. 6B, a die of a cam mechanism which has a cam driver 161 and a cam slider 162 is used. The cam driver 161 is inserted into the blank 101 and moves along its axial direction. The cam slider 162 is arranged between the blank 101 and the cam driver 161 and has S-shaped convex parts 162a which correspond to the shapes of the ball recirculation grooves 103.

The holding member 107 is comprised of split members 107a and 107b which are split across the horizontal direction. The left side split member 107a at which the cam slider 162 is arranged is formed with a convex part 171 which mates with a concave part 102 of the blank 101. The two split members 107a and 107b are formed with a bottom surface 172 which receives the end face 111a of the flange 111, a large diameter inner circumferential surface 173 which receives the outer circumferential surface 111b of the flange 111, and a small diameter inner circumferential surface 174 which receives the outer circumferential surface of the blank 101 other than the flange 111. The convex part 171 of the holding members 107 is the phase (circumferential direction) reference setting part, the end face 172 is the axial direction reference setting part, and the large diameter inner circumferential surface 173 is the radial direction reference setting part.

Further, the left side split member 107a is formed with a surface 175 which receives the lower end face of the cam slider 162. A bottom part of the right side split member 107b at which the cam driver 161 is arranged is formed with a through hole 176 which allows downward movement of the front end of the cam driver 161.

Further, first, the side of the blank 101 where the concave part 102 is formed is placed at the left side split member 107a of the holding member 107. At this time, the concave part 102 of the flange 111 is mated with the convex part 171 of the left side split member 107a for positioning in the circumferential direction. Next, the right side split member 107b is mated with the right side half of the blank 101. Due to this, the blank 101 is positioned in the radial direction by contact of the outer circumferential surface 111b of the flange 111 and the large diameter inner circumferential surface 173 of the holding member 107. Further, the blank 101 is positioned in the axial direction by contact of the end face 111a of the flange 111 and the bottom surface 172 of the holding member 107.

Next, the cam driver 161 is made to move downward whereby force is transmitted from the slanted surface 161a of the cam driver 161 to the slanted surface 162b of the cam slider 162 and the convex parts 162a of the cam slider 162 move in the radial direction of the blank 101. Due to this, the inner circumferential surface 101a of the blank 101 is made to plastically deform so as to form the S-shaped ball recirculation grooves 103.

### <Rolling Groove Forming Step>

Next, using the concave part 102 as the phase reference, the end face 111a of the flange 111 as the axial direction reference, and the outer circumferential surface 111b of the flange 111 as the radial direction reference, the inner circumferential surface 101a of the blank 101 is formed with a ball rolling groove 108 by cutting.

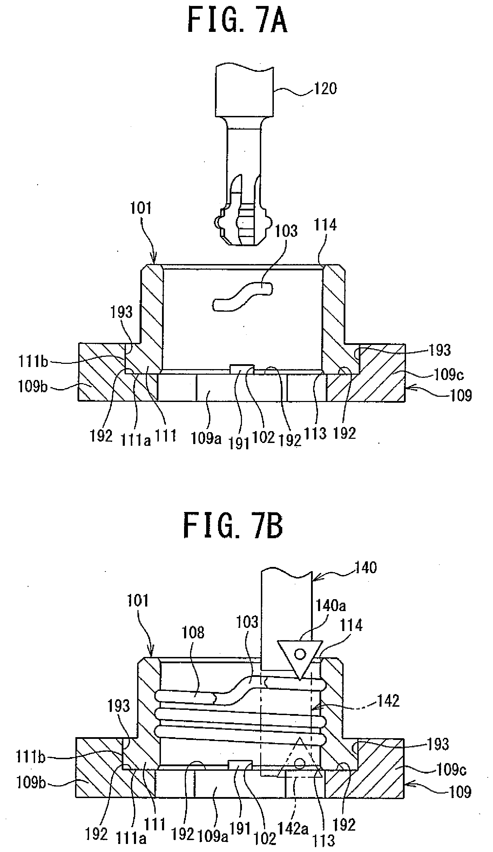

The ball rolling groove is formed, for example, by the method which is shown in FIG. 7A. That is, the holding member 109 of the blank 101 is a three-jaw chuck which is comprised of three jaws 109a to 109c which are arranged at trisected positions of the circumferential direction. The first jaw 109a which is arranged at the inside of FIG. 7A is formed with a convex part 191 which mates with the concave part 102 which is formed at the blank 101. Further, all of the jaws 109a to 109c are formed with a bottom surfaces 192 which receive the end face 111a of the flange 111 and inner circumferential surfaces 193 which receive the outer circumferential surface 111b of the flange 111.

The convex part 191 of the holding member 109 is the phase (circumferential direction) reference setting part, the bottom surface 192 is the axial direction reference setting surface, and the inner circumferential surface 193 is the radial direction reference setting surface.

Further, first, as shown in FIG. 7A, the blank 101 is held by the holding member 109. At this time, the concave part 102 is mated with the convex part 191 of the first jaw 109a, whereby the blank 101 is positioned in the circumferential direction. Further, due to the contact of the outer circumferential surface 111b of the flange 111 and the inner circumferential surfaces 193 of the first to third jaws 109a to 109c, the blank 101 is positioned in the radial direction. Furthermore, due to the contact of the end face 111a of the flange 111 and the bottom surfaces 192 of the first to third jaws 109a to 109c, the blank 101 is positioned in the axial direction.

In this state, a spiral cutter 120 is used to cut the inner circumferential surface 101a of the blank 101, whereby the spiral ball rolling groove 108 is formed so that the two end parts are connected to the ball recirculation grooves 103. Due to this, as shown in FIG. 7B, a state is reached where the two ends of less than one reed of the ball rolling groove 108 are connected by a ball recirculation groove 103.

In the above way, in this embodiment, using the concave part 102 which is formed at the blank forming step as the phase reference, the end face 111a of the flange 111 as the axial direction reference, and the outer circumferential surface 111b of the flange 111 as the radial direction reference, the recirculation groove forming step and the rolling groove forming step are performed. Due to this, the ball recirculation grooves 103 and the ball rolling groove 108 are prevented from being formed in a state deviated in the axial direction, circumferential direction, or radial direction of the nut.

Further, without detaching the blank 101 from the holding member 109 after the rolling groove forming step, as shown in FIG. 7B, the chamfered parts 113 and 114 of the two ends of the inner circumferential surface of the blank 101 in the axial direction are finished using the cutting tools 140 and 142, whereby a nut with a small coaxiality of the BCD (ball center diameter) of the ball rolling groove 108 and the inner circumferences of the two ends in the axial direction can be obtained. The cutting tools 140 and 142 have working heads 140a and 142a which are formed with cutting edges at the equilateral triangle shaped sides. The cutting tool 140 is used to finish the upper side chamfered part 114, while the cutting tool 142 is used to finish the lower side chamfered part 113.

Furthermore, after that, the blank 101 is held and the outer circumferential surface of the blank 101 is finished with reference to the finished chamfered parts 113 and 114 of the two ends in the axial direction to thereby obtain a nut with a small coaxiality of the BCD of the ball rolling groove 108 and the outer circumferential surface.

Note that, in this embodiment, the rolling groove forming step is performed before the finishing step of the chamfered parts 113 and 114, but it is also possible to hold the blank 101 by the holding member 109 and finish the chamfered parts 113 and 114 in that state, then perform the rolling groove forming step without detaching the blank 101 from the holding member 109. Further, the blank 101 after the rolling groove forming step using cutting etc. may also be treated at the ball rolling groove and other necessary locations by the desired heat treatment.

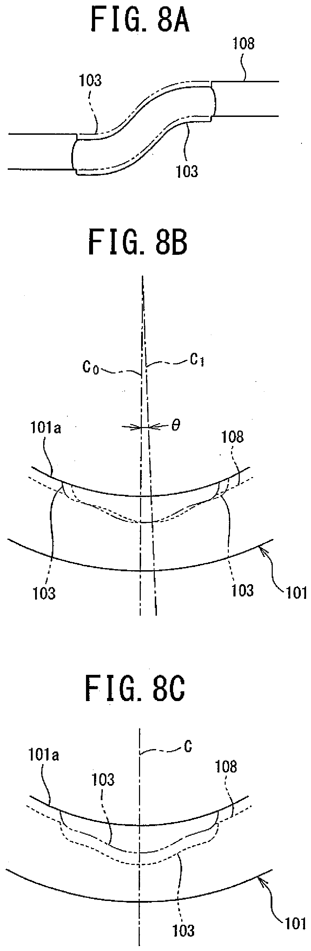

At the time of the recirculation groove forming step and the rolling groove forming step, if the blank 101 is held in a state offset from the holding member in the axial direction, as shown in FIG. 8A by the solid line, step differences are formed between a ball recirculation groove 103 and the ball rolling groove 108 and the balls can no longer be smoothly recirculated. The two-dot chain line is the correct line of the ball recirculation groove 103. As opposed to this, with the method of this embodiment, the same end face 111a of the flange 111 is used as the axial direction reference in the two steps, so such a state can be prevented.

FIG. 8B is a view which explains deviation in the circumferential direction and shows by a broken line an example where the position of formation of a ball recirculation groove 103 with respect to the blank 101 is deviated from the correct position in the circumferential direction by exactly the phase θ. The two-dot chain line is the line of a ball recirculation groove 103 which is formed at the correct position. C0 is the reference line which shows the radial direction of the correct position of formation, while C1 is the reference line which shows the radial direction of the deviated position of formation.

In this example, the blank 101 is held in the state deviated in the circumferential direction with respect to the holding member in the two steps. The ball recirculation groove 103 is formed deviated from the correct position in the radial direction by exactly the phase θ, then the ball rolling groove 108 is formed at the correct position. For this reason, in this example, the two end parts of the ball rolling groove 108 are not connected with the ball recirculation groove 103 or the parts also deviate in the axial direction resulting in step differences. As opposed to this, with this method of the embodiment, the same concave part 102 of the flange 111 is used as the phase reference in the two steps, so such a state can be prevented.

FIG. 8C is a view which explains deviation in the radial direction and shows by a broken line an example where a position of formation of a ball recirculation groove 103 with respect to the blank 101 deviates from the correct position to the outside in the radial direction. The two-dot chain line is the line of the ball recirculation groove 103 which is formed at the correct position.

In this example, the blank 101 is held in a state which is deviated in the radial direction with respect to the holding member in the two steps, so the ball recirculation groove 103 is formed deviated from the correct position in the radial direction to the outside, then the ball rolling groove 108 is formed at the correct position. For this reason, in this example, only the ball recirculation groove 103 is formed deeper than the design value, so the impact given to a ball moving from the ball rolling groove 108 to the ball recirculation groove 103 becomes larger. As opposed to this, with the method of this embodiment, the same outer circumferential surface 111b of the flange 111 is used as the radial direction reference by the two steps, so such a state is prevented.

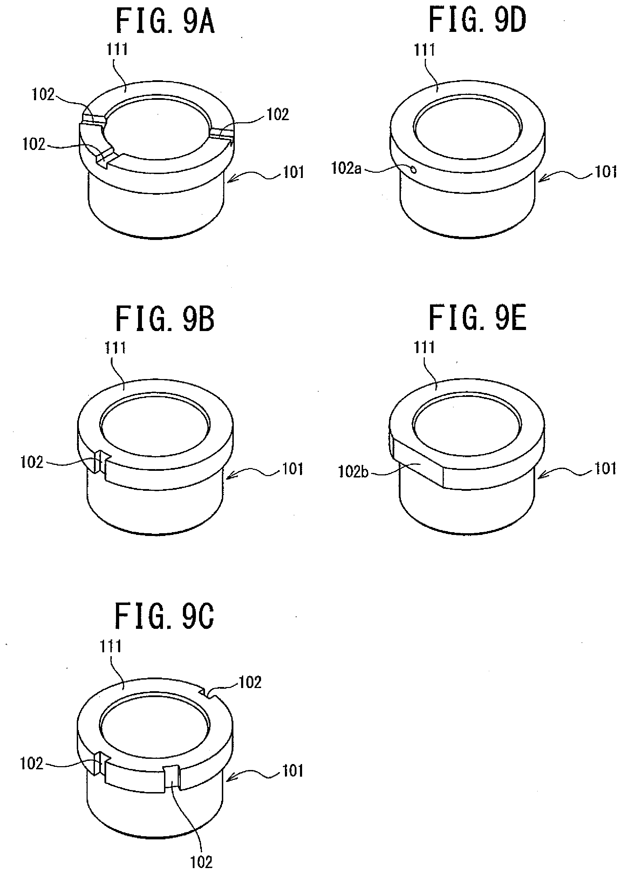

Note that, in this embodiment, as the phase reference, one location of the end face of the flange 111 in the circumferential direction is formed with the concave part 102, but a plurality of phase references may also be formed. The position of formation may also be other than the end face of the flange 111. Examples of formation of phase references other than FIG. 4 are shown in FIGS. 9A to 9E.

In FIG. 9A, in the same way as FIG. 4, key groove shaped concave parts 102 which extend in the radial direction are formed at different intervals at three locations of the end face of the flange 111 in the circumferential direction. When providing a plurality of phase references in this way, it is preferable to provide the plurality not at equal intervals, but at different intervals. If doing this, it is possible to attach the blank while making all of the phase references match the phase reference setting parts of the holding member side to thereby eliminate the possibility of attachment by the wrong phase.

In FIG. 9B, a single location of the outer circumferential surface of the flange 111 is formed with a key groove shaped concave part 102 which extends in the axial direction.

In FIG. 9C, key groove shaped concave parts 102 which extend in the axial direction are formed at different intervals at three locations of the outer circumferential surface of the flange 111 in the circumferential direction.

In FIG. 9D, a single location of the outer circumferential surface of the flange 111 is formed with a circular pinhole 102a.

In FIG. 9E, a single location of the outer circumferential surface of the flange 111 is formed with a cut flat 102b obtained by cutting part of the circumferential surface to a flat surface.

### [Second Embodiment]

The second embodiment relates to a method of production of a nut for ball screw use.

Further, ball screws include ones in which ball return channels are realized by S-shaped recirculation grooves formed at the inner circumferential surfaces of the nuts (for example, see Patent Documents 2, 3, and 6).

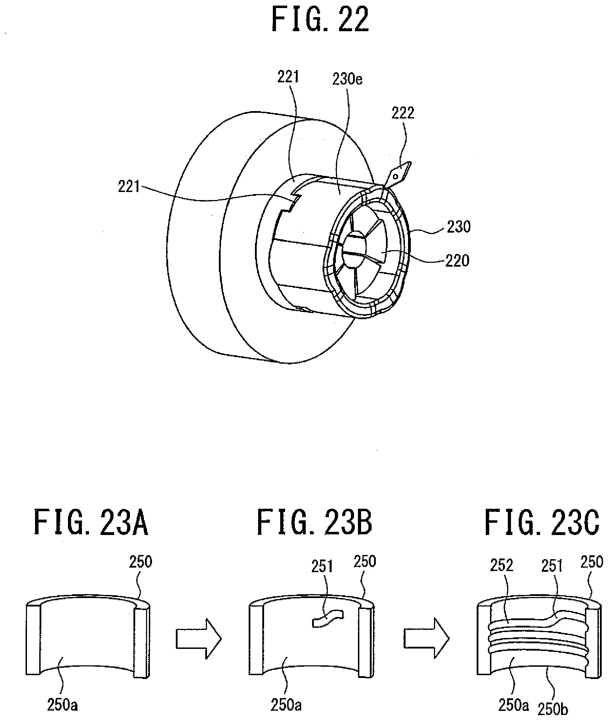

FIGS. 23A to 23C are views which explain a recirculation groove forming step which forms recirculation grooves in the nut blank (nut) and a rolling groove forming step which forms a rolling groove in the nut blank after that.

As shown as the changes from FIG. 23A to 23B, in the recirculation groove forming step, punching, press working, or plastic working by the above-mentioned cam mechanism etc. is used to form recirculation grooves 251 at the inner circumferential surface 250a of the nut blank 250.

After that, as shown as the changes from FIG. 23B to 23C, in the rolling groove forming step, cutting is performed to form a rolling groove 252 in the inner circumferential surface 250a after the recirculation grooves 251 are formed. At this time, in the rolling groove forming step, one end face 250b of the nut blank 250 (in this example, the lower end face in FIG. 23C) is used as the axial direction reference and centering is performed (the nut blank 250 is centered with respect to the processing machine or is positioned in the radial direction), and the nut blank 250 is attached to a not shown processing machine (groove forming machine).

Here, the centering may be performed by utilizing the inner circumferential surface 250a or may be performed by utilizing the outer circumferential surface, but the rolling groove 252 has to be formed at the inner circumferential surface 250a of the nut blank 250 etc., so utilizing the outer circumferential surface is preferable.

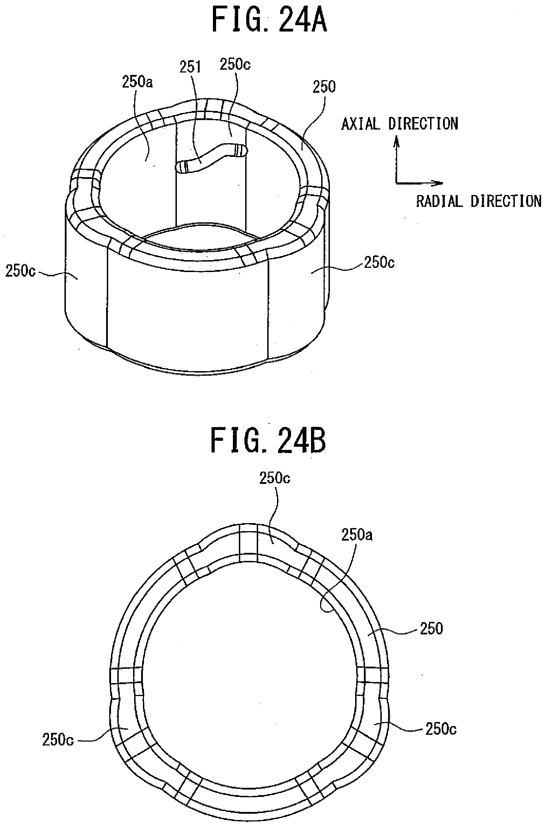

However, as shown in FIGS. 24A and 24B, in the recirculation groove forming step, at the time of plastic working, the metal of the recirculation grooves flows in the radial direction and end face direction (axial direction) of the nut blank 250. For this reason, as shown in FIG. 24A and 24B, deformation occurs in the radial direction and end face direction (axial direction) at the portions 250c in the axial direction relating to the portions of formation of the recirculation grooves 251 including the portions of formation of the recirculation grooves 251, that is, at the portions 250c of the nut blank 250 of the same phase as the recirculation grooves 251 in the circumferential direction. Accordingly, at the portions 250c of the same phase as the recirculation grooves 251 in the circumferential direction of the nut blank 250, the precision before formation of the recirculation grooves is not maintained.

Further, if utilizing such portions 250c for determining the reference in the axial direction or for centering so as to cut the rolling groove in the rolling groove forming step, deviation ends up occurring in the rolling groove in the axial direction or deviation ends up occurring in the radial direction.

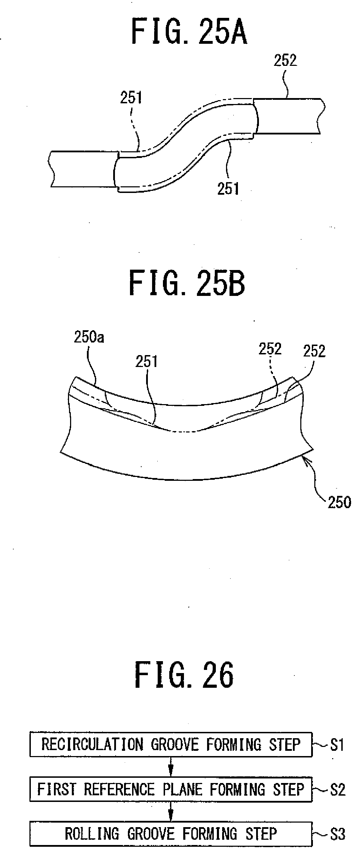

FIG. 25A shows the deviation of the rolling groove 252 in the axial direction, while FIG. 25B shows the deviation of the rolling groove 252 in the radial direction.

As shown in FIG. 25A by the solid line, if deviation of the rolling groove 252 in the axial direction ends up causing step differences to be formed between the recirculation grooves 251 and the rolling groove 252, the balls can no longer be smoothly recirculated. Note that, when there is no deviation in the axial direction of the rolling groove 252, as shown by the two-dot chain line, the recirculation grooves 251 are connected to the rolling groove 252 without step differences.

Further, as shown in FIG. 25B by the broken line, due to the deviation of the rolling groove 252 in the radial direction, the rolling groove 252 is formed deep, so the impact applied to balls which move from the rolling groove 252 to the recirculation grooves 251 becomes larger. Note that, the rolling groove 252 which is shown by the two-dot chain line is shown formed at the correct position.

A method of production of a nut for ball screw use according to the second embodiment produces a nut for ball screw use which has a ball rolling groove at an inner circumferential surface so as to face a ball rolling groove which is formed at an outer circumferential surface of a threaded shaft and has a recirculation groove which connects two end parts of at least one ball rolling groove at its inner circumferential surface and rollably holds the balls in the space which is formed between that ball rolling groove and the ball rolling groove of the threaded shaft and the recirculation groove. The method of production of a nut for ball screw use preferably includes a recirculation groove forming step which presses a recirculation groove forming member in the inner circumferential surface to form the recirculation groove by plastic working and a rolling groove forming step which fastens the nut in which the recirculation groove is formed to a groove forming machine using a portion other than a portion in the axial direction relating to the portion of formation of the recirculation groove in the circumferential direction as a reference for positioning and which uses the groove forming machine to form the ball rolling groove at an inner circumferential surface of the nut.

Further, in such a method of production of a nut for ball screw use, it is preferable to use an intermediate portion in the axial direction at the outer circumferential surface of the portion used as the above reference for positioning as the reference for positioning in the radial direction for fastening to the groove forming machine.

Furthermore, in such a method of production of a nut for ball screw use, it is preferable to use an end face of the nut which forms the end part in the axial direction of the portion used as the above reference for positioning as the reference for positioning in the axial direction for fastening to the groove forming machine.

Further, in such a method of production of a nut for ball screw use, it is preferable to use the portion used as the above reference for positioning as the reference for positioning in the circumferential direction for fastening to the groove forming machine. In this case, it is more preferable that a plurality of recirculation grooves be formed at equal intervals in the circumferential direction and that the nut be fastened so that the references for positioning, which are present in the circumferential direction in the same number as the number of the plurality of recirculation grooves, become equal intervals in the circumferential direction.

Further, in the above such method of production of a nut for ball screw use, it is preferable that the portion used as the reference for positioning in the axial direction and the circumferential direction be shaped to mate with a member which is formed at the end face of the nut at the groove forming machine side.

Further, in such a method of production of a nut for ball screw use, it is preferable that the portion other than the portion in the axial direction relating to the portion of formation of the recirculation groove in the circumferential direction be the reference for positioning when forming the recirculation groove even in the recirculation groove forming step.

According to the method of production of a nut for ball screw use of the second embodiment, a portion in the nut blank with a relatively small deformation due to formation of the recirculation groove is used as a reference for positioning so as to enable formation of a rolling groove in the inner circumferential surface of the nut blank without being affected by deformation of the nut blank caused by formation of the recirculation groove.

One example of the method of production of a nut for ball screw use according to the second embodiment will be explained in detail while referring to the drawings. The second embodiment solves the above obj ect and further improves on the first embodiment.

### (Constitution Etc.)

The present embodiment is a method of production of a nut for ball screw use. The present embodiment will be explained with reference to a recirculation groove forming step and a rolling groove forming step after that in a method of production of a nut for ball screw use.

### (Circulation Groove Forming Step)

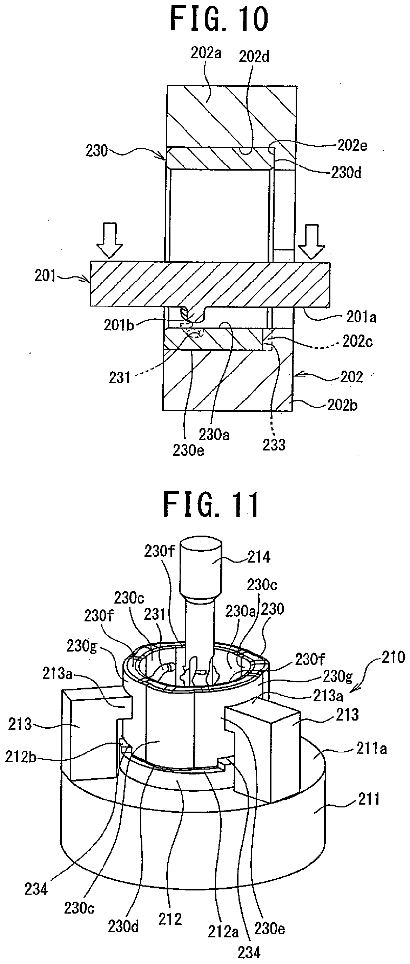

FIG. 10 shows the state when forming recirculation grooves in the inner circumferential surface 230a of the nut blank 230 of a blank in the recirculation groove forming step.

Here, the nut blank 230 is made of a ferrous metal and is formed into an annular shape. This nut blank 230, as shown in FIG. 10, is formed with a key groove shaped concave part 233 which extends in the radial direction at one location in the circumferential direction of the end face 230d. In the recirculation groove forming step, this concave part 233 becomes the circumferential direction reference (phase reference) . Further, in the recirculation groove forming step, the end face 230d of the nut blank 230 becomes the axial direction reference plane, while the outer circumferential surface 230e of the nut blank 230 becomes a radial direction reference (reference of centering) . Note that, this recirculation groove forming step and blank forming step before this may also be performed in the same way as the recirculation groove forming step in the first embodiment and its modifications.

As shown in FIG. 10, for such a nut blank 230, at the recirculation groove forming step, a die which is provided with a working head 201 which has an outer circumferential surface 201a which corresponds to the inner circumferential surface 230a of the nut blank 230 and a holding member 202 which holds the nut blank 230 is used. The outer circumferential surface 201a of the working head 201 is formed with S-shaped convex parts 201b which correspond to the shapes of the recirculation grooves.

The holding member 202 is comprised of split members 202a and 202b which are split across the vertical direction. The lower side split member 202b is formed with convex parts 202c which mate with concave parts 233 of the nut blank 230.

Further, in the recirculation groove forming step, first, the nut blank 230 is arranged at the lower side split member 202b of the holding member 202 with the axial direction oriented in the horizontal direction. At this time, the concave parts 233 are mated with the convex parts 202c of the lower side split member 202b for positioning of the nut blank 230 in the circumferential direction. Next, the upper side split member 202a is mated with the upper side half of the nut blank 230. Due to this, the nut blank 230 is positioned in the radial direction by contact of the outer circumferential surface 230e of the nut blank 230 and the inner circumferential surface 202d of the holding member 202. Further, it is positioned by contact of the end face 230d of the nut blank 230 and the end face 202e of the holding member 202.

Next, the working head 201 is placed inside the nut blank 230, the working head 201 is pressed to make it descend, and the convex parts 201b are pressed against the inner circumferential surface 230a of the nut blank 230 to make the inner circumferential surface 230a plastically deform so as to form S-shaped recirculation grooves 231 at the inner circumferential surface 230a. Note that, for example, as shown in FIG. 6B, a die which is provided with a cam mechanism may be used for plastic working so as to form the recirculation grooves 231.

### (Rolling Groove Forming Step)

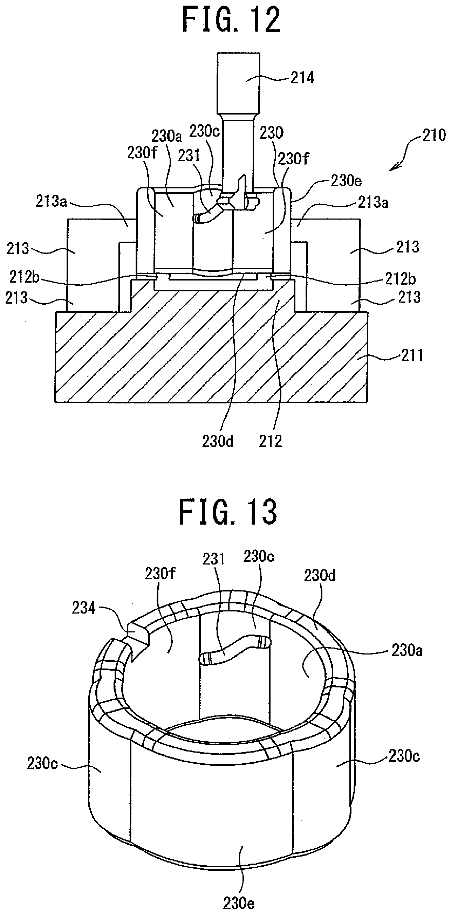

FIG. 11 and FIG. 12 show the state when forming a rolling groove in the inner circumferential surface 230a of the nut blank 230 by a groove forming machine 210 in the rolling groove forming step. FIG. 11 is a perspective view, while FIG. 12 is a cross-sectional view.

In the rolling groove forming step, the nut blank 230 is attached while positioned with respect to the groove forming machine 210 in the axial direction, circumferential direction, and radial direction (centering).

FIG. 13 shows the shape of the nut blank 230 in which a rolling groove is formed by the rolling groove forming step. As shown in FIG. 13 (similar to above FIG. 24), the nut blank 230 is already formed with recirculation grooves 231 at the inner circumferential surface 230a in the recirculation groove forming step, so the portions 230c of the same phase as the recirculation grooves 231 in the circumferential direction (below, referred to as "recirculation groove forming phase portions"), that is, the portions which include the portions of formation of the recirculation grooves 231 in the portions which extend across the two ends in the axial direction, deform in the radial direction and axial direction.

Further, in the present embodiment, the nut blank 230 is formed with a key groove shaped concave part 234 which extends in the radial direction at one location of the end face in the circumferential direction. Here, the position of formation of the concave part 234 in the circumferential direction becomes a portion 230f of a phase where no recirculation groove 231 is formed in the axial direction (below, referred to as a "non-recirculation groove forming phase portion"), that is, a portion which does not include a portion of formation of a recirculation groove 231 in the portion which extend across the two ends in the axial direction. This concave part 234 becomes the phase reference and axial direction reference in the rolling groove forming step.

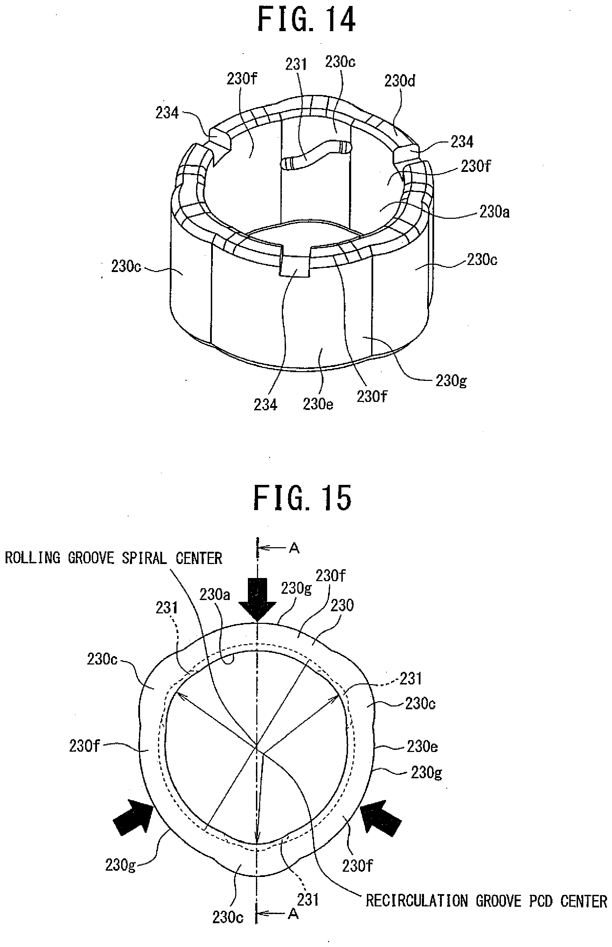

As opposed to this, as shown in FIG. 14, the nut blank 230 may be formed with a plurality of concave parts 234 in the circumferential direction of the end face 230d at equal intervals. Here, the positions of formation of the three concave parts 234 which are shown in this example all become non-recirculation groove forming phase portions 230f.

Further, the concave parts 233 serving as the phase reference at the recirculation groove forming step can be doubly used as concave parts 234.

Corresponding to the shape of the nut blank 230, the groove forming machine 210, as shown in FIG. 11 and FIG. 12, comprises an approximately disk-shaped main body 211 on one side surface 211a of which a mount 212 at which an end part of a nut blank 230 is attached and three clamps (jaws or chucks) 213 which grip the outer circumferential surface of the nut blank 230 are provided.

The mount 212 forms a substantially disk shape of a smaller diameter than the main body 211. This mount 212 is formed at the outer circumference of the side surface 212a with convex parts 212b which form the axial direction reference and circumferential direction reference. In the present embodiment, corresponding to the nut blank 230, which has concave parts 234 at three locations which are shown in FIG. 14, convex parts 212b are formed at the outer circumference of the side surface 212a at three locations at equal intervals in the circumferential direction.

The clamps 213 are members which form the reference in the radial direction or centering. The three clamps 213 are positioned outward from the mount 212 and are arranged at the outer circumference of the side surface 211a of the main body 211. The three clamps 213 are arranged at the outer circumference at equal intervals in the circumferential direction. The clamps 213 are formed with grips 213a which stick out from the end parts to the inner circumference side. The clamps 213 grip the outer circumferential surface 230e (230g) of the nut blank 230, which is attached abutting against the mount 212, by the grips 213a.

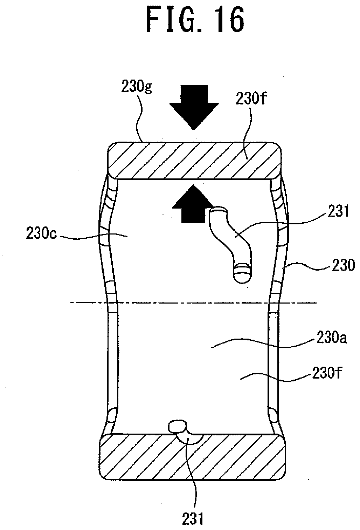

FIG. 15 and FIG. 16 show gripping positions of the three clamps 213. FIG. 15 is a plan view of the nut blank 230, while FIG. 16 is a cross-sectional view of the nut blank 230 of the arrow A-A which is shown in FIG. 15.

As shown in FIG. 15, in the circumferential direction of the nut blank 230, the clamps 213 grip the outer circumferential surface 230g of the non-recirculation groove forming phase portions (portions shown by arrows in FIG. 15) 230f. Further, as shown in FIG. 16, the clamps 213 grip the intermediate portions of the outer circumferential surface 230g in the axial direction (portions shown by arrows in FIG. 15) . In this way, the clamps 213 grip the outer circumferential surfaces 230g of the non-recirculation groove forming phase portions 230f at the intermediate portions in the axial direction.

Here, as will be understood from the relationship between the positions at which the clamps 213 grip the nut blank 230 and the positions of formation of the concave parts 234 at the nut blank 230, as shown in FIG. 11 and FIG. 12, at the groove forming machine 210, the convex parts 212b of the mount 212 and the clamps 213 are positioned at the same positions in the radial direction.

In the rolling groove forming step, at the groove forming machine 210 which has the above such configuration, the end part of the nut blank 230 is attached to the mount 212 and is gripped by the clamps 213. At this time, the nut blank 230 is positioned in the axial direction and the circumferential direction by the concave parts 234 of the end face 230d being mated with the convex parts 212b which form the axial direction reference and circumferential direction reference at the mount 212. Furthermore, the nut blank 230 is positioned in the radial direction or centered by being gripped by the members which form the reference in the radial direction or for centering, that is, the three clamps 213.

Here, to make the positioning in the axial direction reliable, the convex parts 212b of the mount 212 must stick out from the side surface 212a of the mount 212 by predetermined heights. That is, as explained above, the nut blank 230 deforms (sticks out) in the axial direction at the end parts of the recirculation groove forming phase portions 230c due to formation of the recirculation grooves 231. For this reason, even if ending up setting the convex parts 212b low, the deformed portions (sticking out portions) of the nut blank 230 end up contacting the side surface 212a of the mount 212, and the positioning in the axial direction ends up no longer becoming reliable. From this, the convex parts 212b have to have heights such that the end face 230d of the nut blank 230 in the state with the concave parts 234 mated with the convex parts 212b does not contact the side surface 212a of the mount 212.

Further, in the rolling groove forming step, the nut blank 230 in the state attached positioned in the above way is formed with the rolling groove at the inner circumferential surface 230a.

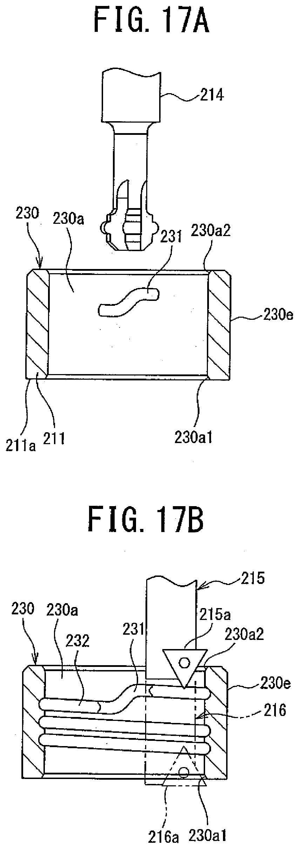

FIG. 17 shows the cutting of the rolling groove which is performed in the rolling groove forming step. Note that, FIG. 17 shows the relationship between the nut blank 230 and the cutting tools in the cutting step (spiral cutter 214 and cutting tools 215 and 216) and omits components such as the clamps 213 in the groove forming machine 210.

As shown in FIG. 17A, the groove forming machine 210 uses the spiral cutter 214 to cut the inner circumferential surface 230a of the nut blank 230 to thereby form a rolling groove 232 so that its two end parts are connected with a recirculation groove 231. Due to this, as shown in FIG. 17B, the two ends of less than one reed of the rolling groove 232 are connected by the recirculation groove 231.

Further, without detaching the nut blank 230 from the groove forming machine 210 after the rolling groove forming step, as shown in FIG. 17B, it is also possible to finish the chamfered parts 230al and 230a2 of the two ends of the inner circumferential surface 230a of the nut blank 230 in the axial direction using the cutting tools 215 and 216. Due to this, it is possible to obtain a nut with a small coaxiality of the PCD (pitch circle diameter) of the rolling groove 232 and inner circumferences of the two ends in the axial direction. The cutting tools 215 and 216 have working heads 215a and 216a which are formed with cutting edges at the equilateral triangle shaped sides. The cutting tool 215 is used to finish the upper side chamfered part 230a2, while the cutting tool 216 is used to finish the lower side chamfered part 230a1.

Furthermore, after that, it is possible to hold the nut blank 230 and finish the outer circumferential surface 230e of the nut blank 230 with reference to the finished chamfered parts 230a1 and 230a2 at the two ends in the axial direction. Due to this, it is possible to obtain a nut with a small coaxiality of the BCD of the rolling groove 232 and the outer circumferential surface 230e.

Note that, in the present embodiment, the rolling groove forming step is performed before the finishing step of the chamfered parts 230a1 and 230a2, but it is also possible to perform the finishing step of the chamfered parts 230a1 and 230a2 in the state gripping the nut blank 230 by the clamps 213, then perform the rolling groove forming step without detaching the nut blank 230 from the clamps 213. Further, it is also possible to treat the nut blank 230 after the rolling groove forming step using cutting at the rolling groove and other necessary locations by the desired heat treatment.

### (Actions, Effects, Etc.)

In the present embodiment, a nut blank 230 which is formed with recirculation grooves 231 by pressing a working head 201 (convex part 201b) against its inner circumferential surface 230a for plastic working is fastened to the groove forming machine 210 using, as a reference for positioning, portions other than the portions in the axial direction relating to the portions for formation of the recirculation grooves 231 in the circumferential direction, that is, the non-recirculation groove forming phase portions 230f, and is formed with a rolling groove 232 by the groove forming machine 210 at the inner circumferential surface 230a of the nut blank 230.

Specifically, in the present embodiment, intermediate portions in the axial direction at the outer circumferential surfaces 230g of the non-recirculation groove forming phase portions 230f are used as the reference for positioning in the radial direction for fastening to the groove forming machine 210. Further, in the present embodiment, concave parts 234 which are formed at the end face 230d in the axial direction of the non-recirculation groove forming phase portions 230f are used as a reference for positioning in the axial direction and circumferential direction for fastening to the groove forming machine 210.

In the present embodiment, by positioning and fastening the blank to the groove forming machine 210 as explained above, it is possible to form the rolling groove 232 at the inner circumferential surface 230a of the nut blank 230 without being affected by deformation of the nut blank 230 due to formation of the recirculation grooves 231.

That is, the non-recirculation groove forming phase portions 230f are maintained in the precision of circularity of the nut blank 230 and precision of flatness of the end face of before plastic working compared with the recirculation groove forming phase portions 230c. For this reason, in the ball forming step, by selectively making the non-recirculation groove forming phase portions 230f which are maintained in the precision of circularity or precision of flatness of the end faces the working reference (positions of abutting against mount 21 and positions of gripping by clamps 213), it is possible to form the rolling groove 232 at the inner circumferential surface 230a of the nut blank 230 without being affected by deformation of the nut blank 230 due to formation of the recirculation grooves 231.

Due to this, in the present embodiment, in the rolling groove forming step, it is possible to attach the nut blank 230 to the groove forming machine 210 without causing it to become off-centered or to tip over. As a result, it is possible to satisfy the required positional precision of the recirculation grooves and rolling groove. Accordingly, in the present embodiment, it is possible to prevent positional deviation of the recirculation grooves and rolling groove to enable smooth movement of the balls, so it is possible to suppress the possibility of a drop in durability, a drop in efficiency, abnormal operating noise, or other trouble which cannot satisfy the quality required from a ball screw.

Further, the intermediate portions in the axial direction at the outer circumferential surfaces 230g of the non-recirculation groove forming phase portions 230f are used as a reference for positioning for fastening to the groove forming machine 210 for the following reason.

The recirculation groove 231 is formed at equal intervals in the circumferential direction, but it may also be formed without symmetry in the axial direction. For this reason, even in a phase in the circumferential direction with no recirculation groove 231, it is believed that the inner circumferential surface 230a and the outer circumferential surface 230e are deformed along with tapering or distortion, though slight, in the axial direction.

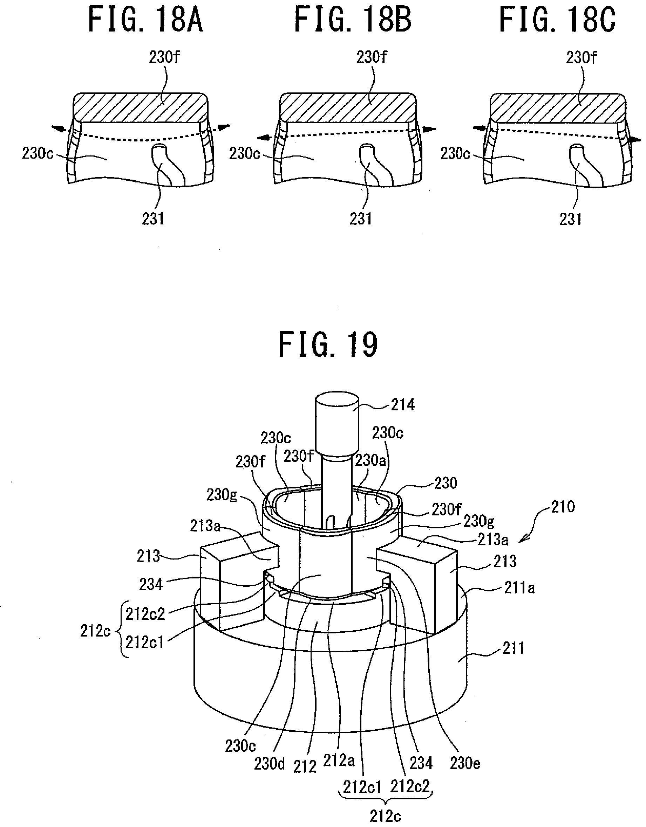

From this, as shown by the arrows in FIGS. 18A to 18C (views which show details of shapes of portions becoming the same phase as the recirculation groove 231 in the circumferential direction in FIG. 16), the mode of deformation also differs due to the phase (position in circumferential direction).

As opposed to this, in the present embodiment, the gripping positions of the clamps 213 are made intermediate portions in the axial direction at the outer circumferential surfaces 230g of the non-recirculation groove forming phase portions 230f, whereby it is possible to maintain the coaxiality of the center of the PCD (pitch circle diameter) of the recirculation grooves 231 (center of arc able to connect points of bottom of recirculation groove) and the spiral center of the rolling groove 232 and possible to greatly reduce the step differences in the radial direction of the connecting parts of the two grooves.

Further, in the present embodiment, references for positioning (in particular, concave parts 234) are provided at three locations, the same number as the recirculation grooves 231. Furthermore, the plurality of references for positioning (in particular, concave parts 234) are arranged in the circumferential direction at equal intervals.

Due to this, in the present embodiment, positioning is possible while maintaining the symmetry of the nut blank 230 in the circumferential direction.

Further, in the present embodiment, the concave parts 233 serving as the phase references at the recirculation groove forming step can be doubly used as concave parts 234. That is, in the present embodiment, the non-recirculation groove forming phase portions 230f also serve as the references of positioning when forming the recirculation grooves at the recirculation groove forming step.

Due to this, in the present embodiment, the recirculation grooves 231 and the rolling groove 232 can be smoothly connected.

### (Modification of Second Embodiment)

In the present embodiment, the shapes of the convex parts 212b of the mount 212 were explained specifically, but the invention is not limited to this.

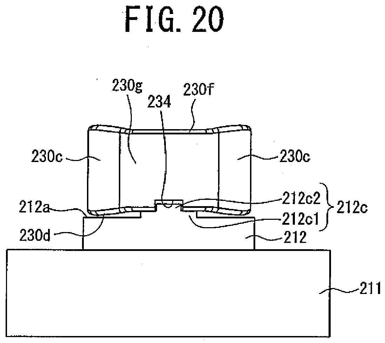

FIG. 19 and FIG. 20 show other shapes which correspond to such convex parts. FIG. 19 is a perspective view, while FIG. 20 is a front view.

As shown in FIG. 19 and FIG. 20, the outer circumference of the side surface 212a of the mount 212 is formed with projecting parts 212c. The projecting parts 212c have first convex parts 212c1 which stick out from the side surface 212a and second convex parts 212c2 which stick out from the top surfaces of the first convex parts 212c1 and which have shapes of shorter lengths in the circumferential direction than the first convex parts 212c1. That is, in the above-mentioned second embodiment, the convex parts 212b are formed as single steps relative to the side surface 212a, while in the modification of the second embodiment, the projecting parts 212c are formed as two steps relative to the side surface 212a.

Here, the second convex parts 212c2, in the same way as the convex parts 212b, become the portions with which the concave parts 234 of the end face 230d are mated. Further, the first convex parts 212c1 become the portions which adjoin the concave parts 234 at the end face 230d, that is, the portions at which the end face portion of the nut blank 230 which is not deformed abuts. Further, such projecting parts 212c, in the same way as the convex parts 212b, form the references in the axial direction and the references in the peripheral direction.

Further, in the present embodiment, the projecting parts 212c may be formed at three locations at the side surface 212a so as to correspond to a nut blank 230 which has concave parts 234 at the three locations which are shown in FIG. 14, but the invention is not limited to this. That is, a projecting part 212c which has a first convex part 212c1 and second convex part 212c2 is formed at least at one location, while projecting parts 212c which do not have second convex parts 212c2 and have only first convex parts 212c1 are formed at other locations corresponding to the non-recirculation groove forming phase portions 230f. That is, the number of the projecting parts 212c is made the same number as the number of the non-recirculation groove forming phase portions 230f, but the projecting part 212c of at least one location is comprised of a two-step structure of the first convex part 212c1 and second convex part 212c2, while the projecting parts 212c of other locations are comprised of single-step structures which do not have the second convex parts 212c2 and have only the first convex parts 212c1.

If forming such projecting parts 212c at the mount 212, at the rolling groove forming step, the nut blank 230 is attached with the concave parts 234 of the end face 230d mated with the second convex parts 212c2 and with adjoining parts of the concave parts 234 at the end face 230d abutting against the first convex parts 212c.

Due to this, the nut blank 230 is positioned in the circumferential direction by the concave parts 234 of the end face 230d being mated with the second convex parts 212c2 (second convex parts 212c2 which are formed at least at one location) . Furthermore, the nut blank 230 is positioned in the axial direction by the adjoining portions of the concave parts 234 at the end face 230d abutting against the first convex parts 212c1.

Due to such a situation, the second convex parts 212c2 have as their object positioning in the circumferential direction or realize positioning in the axial direction by the first convex parts 212c1, so differ from the convex parts 212b of the above-mentioned second embodiment. The end face does not have to stick out to an extent contacting the bottom surfaces of the concave parts 234. Further, the first convex parts 212c1 have as their object positioning in the axial direction, so in the same way as the convex parts 212b of the above-mentioned second embodiment, the end face 230d of the recirculation groove forming phase portions 230c of the nut blank 230 has to have a height whereby the side surface 212a of the mount 212 is not contacted.

In the above way, in a modification of a second embodiment, the projecting parts 212c which have the first convex parts 212c1 and second convex parts 212c2 (in some cases, the projecting parts 212c which have only the first convex parts 212c1) can be used for positioning of the nut blank 230 in the axial direction and circumferential direction. Further, in the modification of the second embodiment, by providing the second convex part 212c2 at least at one location, in the same way as the above-mentioned second embodiment, it is possible to maintain the symmetry of the nut blank 230 in the circumferential direction for positioning. For example, due to this, in the modification of the second embodiment, it is possible to form a concave part 234 at just a single location of the nut blank 230 and otherwise keep down costs while positioning.

In the second embodiment, the inner circumferential surface 230a of the nut blank 230 is gripped by the clamps (internal chuck) and the outer circumferential surface etc. is cut, then, as mentioned above, the outer circumferential surface can be gripped and the inner circumferential surface 230a of the nut blank 230 formed with the rolling groove 232.

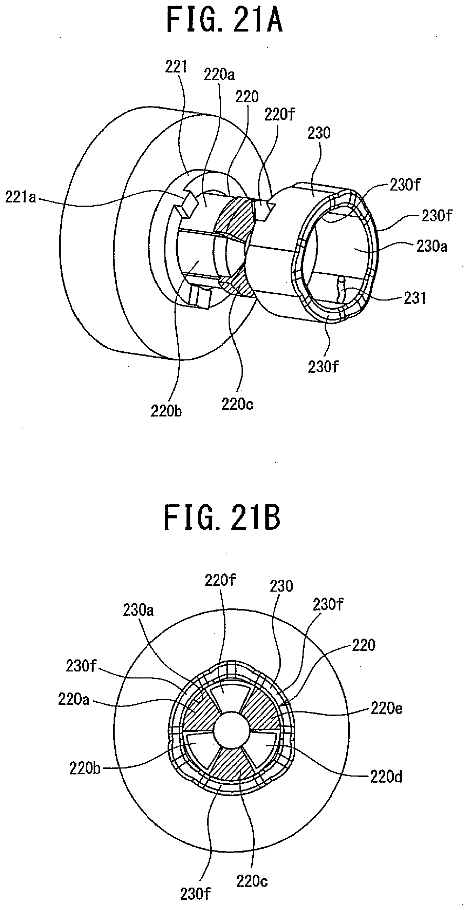

FIGS. 21A and 21B show the case of holding the inner circumferential surface 230a of the nut blank 230 by a clamp 220. FIG. 21A is a perspective view which shows the state when holding the inner circumferential surface 230a of the nut blank 230 by the clamp 220, while FIG. 21B is a plan view which shows the state when holding the inner circumferential surface 230a of the nut blank 230 by the clamp 220.

As shown in FIGS. 21A and B, the clamp 220 forms a substantially columnar shape overall, but is split in the circumferential direction into six equal parts. Further, the clamp 220 uses the mutually equidistant members 220a, 220c, and 220e at three locations among the thus split and formed plurality of portions 220a, 220b, 220c, 220d, 220e, and 220f so as to hold the inner circumferential surface 230a of the nut blank 230. Specifically, the grip parts which stick out to the outer circumferential side in the end parts of the three members 220a, 220c, and 220e (outer circumferential parts of fan-shaped portions shown by hatching in FIG. 21) are used to grip the inner circumferential surfaces 230a of the non-recirculation groove forming phase portions 230f of the nut blank 230.

Note that, even when holding the inner circumferential surface 230a by the clamp 220 in this way, the concave parts 234 of the nut blank 230 are mated with the convex parts 221a of the mount 221 such as shown in FIG. 21A so that the nut blank 230 is positioned, needless to say.

FIG. 22 shows an example of cutting the nut blank 230 which is gripped by the clamp 220 at the inner circumferential surface 230a.

As shown in FIG. 22, for cutting, it is possible to use a cutting tool (working head) 222 to finish the chamfered parts or finish the outer circumferential surface. Further, after that, as explained above, the outer circumferential surface is clamped to form the rolling groove 232 at the inner circumferential surface 230a of the nut blank 230.

Further, the present embodiment can be applied to a nut blank which has a recirculation groove at least at one location.

### [Third Embodiment]

The third embodiment relates to a method of production of a nut for ball screw use, more particularly relates to a method of production of a nut which substantially uses a recirculation groove itself as a working reference to determine the working position of a rolling groove and integrally forms recirculation grooves together with the rolling groove at the inner circumferential surface.

In the past, as a ball screw which is used for electric actuators etc. of automobiles, railroads, ships, industrial machines, and other various machinery, a ball screw which has a nut which is integrally formed with a rolling groove and recirculation grooves at its inner circumferential surface has been developed.

As such a method of production of a ball screw, the art is disclosed of forming the inner circumferential surface of the nut with recirculation grooves and a phase reference by plastic working and using the phase reference as the basis to form a rolling groove in the inner circumferential surface of the nut (for example, Patent Document 4) .

According to the art of this Patent Document 4, forging etc. is not used, so it is possible to form high precision recirculation grooves and rolling groove at a low cost. Further, the cutting step can be eliminated, so mass production of the nut becomes possible.

However, in the method of production of a ball screw which is described in Patent Document 4, a phase reference mark is formed at the inner circumference of the left end of the workpiece. With just this, at the time of plastic working of the recirculation grooves, the axial direction position varies and positional deviation of the recirculation grooves and rolling groove sometimes occurs. This is due to the fact that the position of formation of the phase reference mark itself easily deviates. Further, this is due to the fact that with using plastic working to form the recirculation grooves, variations easily arise in the position of the grooves from the working reference plane, while with using cutting to form the rolling groove, the variation in position of the rolling groove from the reference plane is generally smaller compared with plastic working.

Such positional deviation between the rolling groove and recirculation grooves causes formation of step differences at the connecting parts of the same and obstructs smooth movement of the balls, so causes poor operation, a drop in durability, a drop in efficiency, abnormal operating noise, and other trouble resulting in unsatisfactory quality as a ball screw. There has been room for improvement.

Therefore, the third embodiment was made taking note of this problem and has as its object the provision of a method of production of a nut for ball screw use which reduces deviation of the recirculation grooves and rolling groove in the axial direction.

A third embodiment for achieving the above object provides a method of production of a nut for a ball screw which has a threaded shaft which is formed with a spiral rolling groove at the outer circumferential surface, a nut which is arranged so as to surround the threaded shaft and which is formed with a spiral rolling groove at its inner circumferential surface and a recirculation groove which connects two ends of the rolling groove and sticks out in the radial direction, and a plurality of balls which are arranged rollably along a rolling channel which is formed between the rolling groove of the threaded shaft and the rolling groove of the nut which face each other, the method of production of a nut for ball screw use including a recirculation groove forming step which forms the recirculation groove by plastic working in an inner circumferential surface of a cylindrical worked object and a rolling groove forming step which forms the rolling groove of the nut by cutting using a cutting tool at the inner circumferential surface of the worked object in which the recirculation groove was formed, the method of production of a nut for ball screw use characterized by performing a recirculation groove position identifying step which identifies an axial direction position of a recirculation groove with respect to a machining origin of the cutting after the recirculation groove forming step and by using the axial direction position of the recirculation groove as the basis to perform the rolling groove forming step from that position.

According to such a method of production of a nut for ball screw use, between the recirculation groove forming step and the rolling groove forming step, a recirculation groove position identifying step is performed which uses a chuck to directly grip a recirculation groove of the nut to thereby determine the axial direction position of the recirculation groove with respect to the chuck and as a result determine the axial direction position of the recirculation groove of the nut with respect to the machining origin in the rolling groove forming step, so it is possible to provide a method of production of a nut for ball screw use which reduces the deviation between recirculation grooves and a rolling groove in the axial direction.

In such a method of production of a nut for ball screw use, the recirculation groove position identifying step is a step which includes a first reference plane forming step which uses a chuck device to directly grip at least the recirculation groove and cuts the end face of the worked object in the axial direction in that state forms a first working reference plane for confirming the position of the end face of the worked object in the axial direction with respect to the recirculation groove and uses the position of the recirculation groove and the position of the first working reference plane at the chuck device when making the first working reference plane abut against a fixture reference plane as the basis to identify the position of the recirculation groove with respect to the fixture reference plane.

According to such a method of production of a nut, in the rolling groove forming step, the rolling groove is formed with reference to the first working reference plane which is formed so as to be perpendicular with the inner circumferential surface. That is, the workpiece, which is gripped with the first working reference plane abutting against the reference plane of the fixture (fixture reference plane), is formed with the rolling groove in a state with deviation of the recirculation groove in the axial direction with respect the machining origin of the cutting tool reduced. As a result, it is possible to provide a method of production of a nut for ball screw use which reduces the deviation of the recirculation grooves and rolling groove in the axial direction.

Further, in such a method of production of a nut for ball screw use, after the first reference plane forming step, a second reference plane forming step which uses a chuck device to directly grip at least a recirculation groove and cuts the outer circumferential surface of the worked object in that state to form a second working reference plane which is coaxial with the PCD center of the recirculation groove is included. The position of the recirculation groove and the position of the second working reference plane at the chuck device when the first working reference plane and second working reference plane are made to abut against the fixture reference plane are preferably used as the basis to identify the position of the recirculation groove with respect to the second working reference plane and perform the rolling groove forming step from that position.

According to such a method of production of a nut, it is possible to use the outer circumferential surface of the nut as the working reference at the time of the rolling groove forming step as the second working reference plane so as to improve the coaxiality of the PCD of the recirculation groove and the center of the rolling groove.

Further, in such a method of production of a nut for ball screw use, the recirculation groove position identifying step is a step of using a chuck device of a conveyor system which conveys the worked object to directly grip at least a recirculation groove and positioning the worked object in that state so that the recirculation groove becomes a predetermined position with respect to the machining origin.

According to such a method of production of a nut, the conveyor system which conveys an object to the rolling groove forming machine directly grips the recirculation groove and releases it at a predetermined position inside a processing machine, so there is no variation in the specified axial direction position of the recirculation groove. Accordingly, it is possible to provide a method of production of a nut for ball screw use which reduces deviation of the recirculation grooves and rolling groove in the axial direction.

According to the third embodiment, it is possible to provide a method of production of a nut for ball screw use which reduces deviation between the recirculation grooves and the rolling groove in the axial direction.

Below, an example of a method of production of a nut for ball screw use according to the third embodiment will be explained while referring to the drawings. The third embodiment is an example of use of a recirculation groove which was formed at the recirculation groove forming step as a positioning reference.

### (First Example)

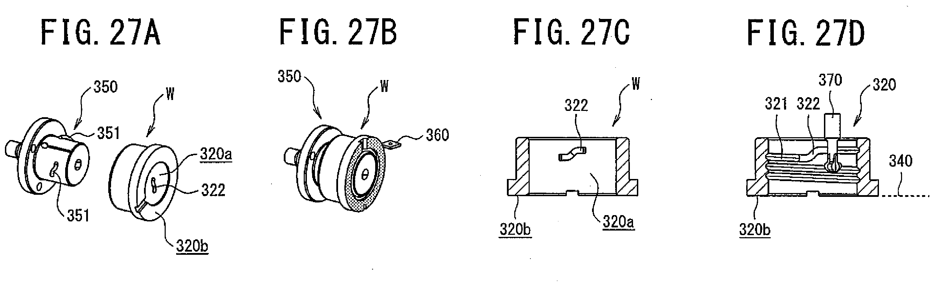

FIG. 26 is a flow chart which shows a first example of a method of production of a nut for ball screw use according to the third embodiment. Further, FIGS. 27A to 27D are views which show the first example of the method of production of a nut for ball screw use according to the third embodiment, wherein 27A is a perspective view which shows an outline of the nut at which the recirculation groove forming step is performed and a chuck device, 27B is a perspective view which shows a first reference plane forming step, 27C is a cross-sectional view which shows a first reference plane, and 27D is a cross-sectional view which shows a recirculation groove forming step.

The constitution and operation of a ball screw which has a nut which was fabricated by the first example of the method of production of a nut for ball screw use according to the third embodiment are similar to those of the ball screw according to the first embodiment which is explained using FIGS. 1 to 3, so the explanation will be omitted.

The method of production of a nut for ball screw use, as shown in FIG. 26, includes a recirculation groove forming step S1, a first reference plane forming step S2, and a rolling groove forming step S3. Note that, in the following explanation, the working of the rolling groove in the rolling groove step will be explained limited to cutting, but it is preferable to similarly perform grinding as the finishing work on the rolling groove.

### <Recirculation Groove Forming Step>

The recirculation groove forming step is a step which forms recirculation grooves by plastic working at an inner circumferential surface of a hollow cylindrical worked object.

Specifically, first, a blank which was formed with a flange 323 at a previous step, that is, a hollow cylindrical worked object (below, referred to as the "workpiece") W, is formed with a plurality of recirculation grooves 322, 322 at the inner circumferential surface 320a of the workpiece W by plastic working. Note that, for example, as shown in FIG. 6B, it is also possible to use a die which is provided with a cam mechanism for plastic working so as to form recirculation grooves 231.

### <First Reference Plane Forming Step>

The first reference plane forming step is a step which cuts the end face of the workpiece W in the axial direction to form a first working reference plane which is perpendicular to the inner circumferential surface after the recirculation groove forming step. Specifically, as shown in FIG. 27A, after the recirculation groove forming step, first, the chuck device 350 is used to grip the workpiece W. The chuck device 350 is, for example, an internal collet type chuck device. In the recirculation groove forming step, there are mating parts 351, 351 which mate with the recirculation grooves 322, 322 which are formed at the inner circumference 320a of the workpiece W. Note that, the chuck device 350 may be an internal three-jaw type chuck device in addition to an internal collet type chuck device.

The workpiece W is cut by a cutting tool 360 at the end face 320b of the workpiece W in the axial direction in the state with the chuck device 350 directly gripping at least the recirculation grooves 322 at the chuck device 350 by a collet mechanism using the mating parts 351, 351 (see FIG. 27B). Such a cut end face 320b is made the first working reference plane 320b which is perpendicular to the inner circumferential surface 320a (see FIG. 27C) . That is, the first working reference plane 320b is worked to dimensions which are set for the recirculation groove. Further, after that, the workpiece W is conveyed by the conveyor system to the rolling groove forming step.

### <Rolling Groove Forming Step>

The rolling groove forming step is a step which forms a rolling groove 321 at the inner circumferential surface 320a of the workpiece W at which the recirculation grooves 322 are formed. Specifically, first, the chuck device 350 grips the workpiece W and in that state, the first working reference plane 320b is made to abut against the fixture reference plane 340 (FIG. 27D). Further, the workpiece W which is fastened with the first working reference plane 320b abutting against the fixture reference plane 340 is cut using the cutting tool 370 while using the dimensions which were set at the first reference plane forming step as the working position of the rolling groove using as reference the working reference plane 340 to thereby form the rolling groove 321. The workpiece W after the rolling groove forming step using cutting may be heat treated as desired at the rolling groove or other necessary locations.

As explained above, according to the first example of the third embodiment, at the rolling groove forming step, the rolling groove 321 is formed with reference to the first working reference plane 320b which is formed to be perpendicular to the inner circumferential surface 320a. That is, the workpiece W which is gripped with the first working reference plane 320b abutting against the fixture reference plane 340 is formed with the rolling groove 321 in a state with deviation of the recirculation grooves 322 in the axial direction with respect to the machining origin of the cutting machine reduced.

Therefore, it is possible to provide a method of production of a nut for ball screw use which reduces the deviation of the recirculation grooves and rolling groove in the axial direction.

### (Second Example)

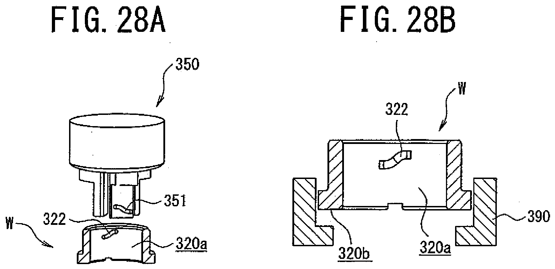

Below, a second example of the third embodiment will be explained with reference to the drawings. A method of production of a nut for ball screw use according to the second example of the third embodiment differs from the above-mentioned first example only in the recirculation groove position identifying step. Similar constitutions and operations are assigned the same reference numerals as the first example and explanations are omitted. FIGS. 28A and 28B are views which show the method of production of a nut for ball screw use according to the second example of the third embodiment, wherein 28A is a perspective view which shows a conveyance state and 28B is a cross-sectional view which shows the chucked state of the worked object by a processing machine.

In the above-mentioned first example, the recirculation groove position identifying step was the "first reference plane forming step". In the second example, envisioning the case where the workpiece W is supplied to the rolling groove forming machine which is provided with the cutting tool by an automatic conveyor system, the recirculation groove position identifying step is replaced with a step which identifies the axial direction positions of the recirculation grooves without forming the first reference plane.

Specifically, as shown in FIG. 28A and 28B, first, the chuck device 350 which has the mating parts 351 has a conveyor function which conveys the workpiece W. The mating parts 351 have shapes which can mate with the recirculation grooves 322 and are used to directly grip at least the recirculation grooves 322. In that state, the workpiece W is positioned so that the recirculation grooves 322 become predetermined positions with respect to the machining origin of the rolling groove forming machine. Further, at that position, the workpiece W is gripped by a fixture 390, then the grip on the recirculation grooves 322 by the chuck device 350 which has the conveyor function is released and the rolling groove forming step is performed.

Note that, the end face of the workpiece W is not constrained by the chuck at the rolling groove forming machine side. That is, the chuck mechanism which is provided at the rolling groove forming machine side grips only the outer circumferential surface of the workpiece W etc. There is no need for chucking which constrains the axial direction position of the workpiece W (chucking abutting against end face of workpiece W).

In this way, according to the second example, the conveyor system which conveys an object to a rolling groove forming machine directly grips the recirculation grooves 322 and releases them at a predetermined position inside the processing machine, so there is no variation in the specified position of the recirculation grooves 322 in the axial direction. Accordingly, it is possible to provide a method of production of a nut for ball screw use which reduces the deviation of the recirculation grooves and rolling groove in the axial direction.

### (Third Example)

Below, a third example of the third embodiment will be explained with reference to the drawings. A method of production of a nut for ball screw use according to a third example of the third embodiment differs from the above-mentioned first example only on the point of including a working position correction step. Similar constitutions and operations are assigned the same reference numerals as the first example and explanations are omitted.

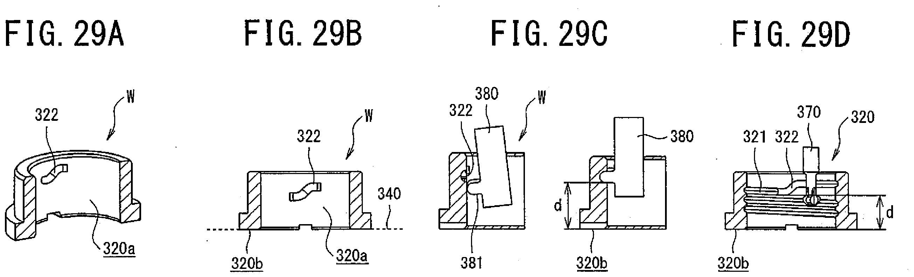

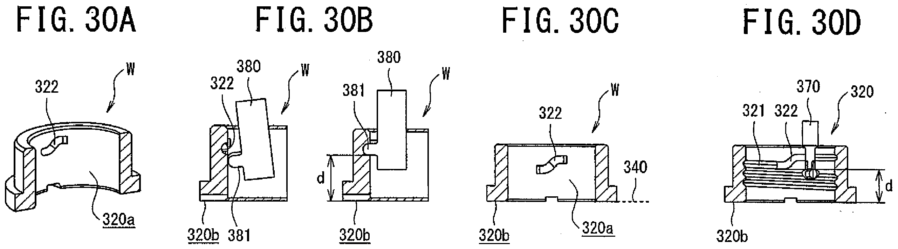

FIGS. 29A to 29D are views which show a method of production of a nut for ball screw use according to the third example of the third embodiment, wherein 29A is a cross-sectional view which shows an outline of a nut on which the recirculation groove forming step is performed, 29B is a cross-sectional view which shows a first reference plane, 29C is a cross-sectional view which shows a working position correction step, and 29D is a cross-sectional view which shows a rolling groove forming step. Further, FIGS. 30A to 30D are views which show a modification of a method of production of a nut for ball screw use according to the third example of the third embodiment, wherein 30A is a cross-sectional view which shows a working position correction step, 30B is a cross-sectional view which shows an outline of a nut on which the recirculation groove forming step is performed, 30C is a cross-sectional view which shows the first reference plane, and 30D is a cross-sectional view which shows a rolling groove forming step.

In the third example, before the rolling groove forming step, there is a recirculation groove forming step which uses the positions of the recirculation grooves 322 of the workpiece W which is set at the fixture as the basis to correct the working position of the cutting tool 370. Specifically, first, in the same way as the above-mentioned first example, the inner circumferential surface 320a is formed with the recirculation grooves 322 (FIG. 29A), while the workpiece W is gripped while making the first working reference plane 320b abut against the fixture reference plane 340 (FIG. 29B). After that, the positions of the recirculation grooves 322 of the workpiece W which is set at the fixture are measured by the recirculation groove position measuring means 380 (FIG. 29C).

The control means for controlling the cutting tool 370 and recirculation groove position measuring means 380 (not shown) uses the results of measurement as the basis to judge whether to correct the position of the cutting tool 370 at the rolling groove forming step and, if correction is necessary, uses the obtained results of measurement as the basis to perform the rolling groove forming step on the workpiece W (FIG. 29D).

Here, in correcting the position of the cutting tool, what are corrected are the origin coordinate values, working position, cutting tool length correction value, etc. On the other hand, if the result of judgment is that correction is unnecessary, the same procedure is followed as with the above-mentioned first example to perform the rolling groove forming step on the workpiece W. Here, the recirculation groove position measuring means 380 has a probe 381 of a shape which mates with a recirculation groove 322 (see FIG. 29C). At the working position correction step, using the movement of this probe 381, the distance "d" from the first working reference plane 320b to a recirculation groove 322 is measured and whether correction is required or not is judged by a not shown control means.

Further, as a modification of the third example, as shown in FIGS. 30A to 30D, the timing of performing the working position correction step may also be changed. Specifically, first, in the same way as the above-mentioned first example, before the workpiece W which is formed with the recirculation grooves 322 at the inner circumferential surface 320a (FIG. 30A) is supplied to the processing machine, the recirculation groove position measuring means 380 is used to measure the distance "d" from the first working reference plane 320b to a recirculation groove 322 (FIG. 30B) . After that, the workpiece W is gripped by making the first working reference plane 320b abut against the fixture reference plane 340 (FIG. 30C).

The control means for controlling the cutting tool 370 and recirculation groove position measuring means 380 (not shown) uses the results of measurement to judge whether to correct the position of the cutting tool 370 in the rolling groove forming step and, if correction is necessary, uses the obtained results of measurement as the basis to perform the rolling groove forming step on the workpiece W (FIG. 30D). Here, in correcting the position of the cutting tool, what are corrected are the origin coordinate values, working position, cutting tool length correction value, etc. On the other hand, if the result of judgment is that correction is unnecessary, the same procedure is followed as with the above-mentioned first example to perform the rolling groove forming step on the workpiece W.

### (Fourth Example)

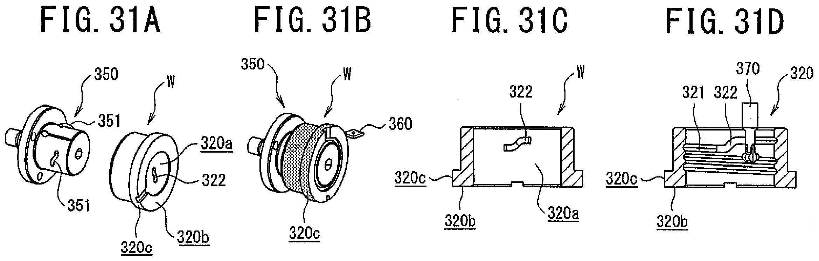

Below, a fourth example of the third embodiment will be explained with reference to the drawings. The method of production of a nut for ball screw use according to the fourth example of the third embodiment differs from the above-mentioned first example only on the point of including the second reference plane forming step, so explanation of the similar constitutions and operation which are assigned the same reference numerals as the first example is omitted. FIGS. 31A to 31D are views which show an embodiment of a method of production of a nut for ball screw use according to the fourth example of the third embodiment, wherein 31A is a perspective view which shows an outline of a nut on which the recirculation groove forming step is performed and a chuck device, 31B is a perspective view which shows a second reference plane forming step, 31C is a cross-sectional view which shows a first reference plane, and 31D is a cross-sectional view which shows a recirculation groove forming step.

In the fourth example, a second reference plane forming step which forms a second working reference plane for reducing the deviation of the recirculation grooves and rolling groove which are formed at the nut in the radial direction is included.

### <Second Reference Plane Forming Step>

The second reference plane forming step is a step which cuts the outer circumferential surface of the workpiece W to form a second working reference plane which is parallel to the inner circumferential surface after the first working reference plane forming step. Specifically, as shown in FIG. 31A, after the first working reference plane forming step, first, a chuck device 350 is used to grip the workpiece W. The chuck device 350 is, for example, an internal collet type chuck device. In the recirculation groove forming step, there are mating parts 351, 351 which mate with the recirculation grooves 322, 322 which are formed at the inner circumference 320a of the workpiece W. Note that, the chuck device 350 may be an internal three-jaw type chuck device in addition to an internal collet type chuck device.

The workpiece W is cut by the cutting tool 360 at the outer circumferential surface 320c of the workpiece W (outer circumferential surface of flange 323) in the state with the chuck device 350 directly gripping at least the recirculation grooves 322 by the collet mechanism using the mating parts 351, 351 (see FIG. 31B). The thus cut outer circumferential surface 320c is made the second working reference plane 320c which is parallel to the inner circumferential surface 320a (see FIG. 31C). Note that, the second working reference plane 320c is not limited to the outer circumferential surface of the flange 323 so long as the outer circumferential surface of the workpiece W and may also be the outer circumferential surface of the main body part.

After that, the first working reference plane 320b and the second working reference plane 320c are used as the basis in the same way as the first example to perform the rolling groove forming step and fabricate the nut 320 (see FIG. 31D).

Here, as the cause of the "deviation in the radial direction", (1) the case where deviation occurs in the centering of the nut at each of the time of formation of the recirculation grooves and the time of cutting of the rolling groove, (2) the case where the concentricity of the inside and outside diameters of the workpiece before formation of the recirculation groove greatly deviates, etc. may be mentioned.

In the fourth example, in addition to the effect of elimination of the deviation in the axial direction, by making the outer circumferential surface of the nut the working reference at the time of the rolling groove forming step as the second working reference plane, it is possible to reduce the deviation of the nut in the radial direction. Further, the recirculation grooves are directly clamped to perform the rolling groove forming step, so it is possible to improve the coaxiality of the PCD (pitch circle diameter) of the recirculation grooves and the center of the rolling groove.

Above, the method of production of a nut for ball screw use according to the third embodiment was explained, but the third embodiment is not limited to the above examples. Various modifications are possible within the scope of the claims.

### [Fourth Embodiment]

The fourth embodiment relates to a method of production of a nut for ball screw use, in particular, a method of production of a nut which deals with any cases of substantial error in the position of the working references with respect to the origin of the processing machine by correction of the tool position by measurement and which forms recirculation grooves together with the rolling groove in the inner circumferential surface.

Therefore, the fourth embodiment was made taking note of this problem and has as its object the provision of a method of production of a nut for ball screw use which reduces deviation of the recirculation grooves and rolling groove in the axial direction, which problem is solved by means of a method as defined in the claims.

A method of production of a nut for ball screw use according to the fourth embodiment for achieving the above object provides a method of production of a nut for a ball screw which has a threaded shaft which is formed with a spiral rolling groove at its outer circumferential surface, a nut which is arranged so as to surround the threaded shaft and which is formed with a spiral rolling groove and a recirculation groove which connects two ends of the rolling groove and sticks out in the radial direction at its inner circumferential surface, and a plurality of balls which are arranged rollably along the rolling channel which is formed between the rolling groove of the threaded shaft and the rolling groove of the nut which face each other, the method of production of a nut for ball screw use including a recirculation groove forming step which forms a recirculation groove by plastic working at the inner circumferential surface of the cylindrical worked object and a rolling groove forming step which forms a rolling groove of the nut by cutting using a cutting tool at the inner circumferential surface of the worked object in which the recirculation groove was formed, the method of production of a nut for ball screw use characterized by including a working position correction step which measures the position of the recirculation groove using the end face of the nut in the axial direction as a reference and uses the results of measurement to correct the working position of the cutting tool.

According to this fourth embodiment, it is possible to provide a method of production of a nut for ball screw use which uses the results obtained by the working position correction step as the basis to correct the working position of a cutting tool and then forms a rolling groove to thereby reduce the deviation of the recirculation grooves and rolling groove in the axial direction.

In the method of production of a nut for ball screw use of such a fourth embodiment, it is preferable to include a working reference plane forming step which cuts an end face of the nut in the axial direction so as to be perpendicular to the inner circumferential surface to thereby forma working reference plane. If doing this, it is possible to make the reference for measurement of the position of the recirculation groove the working reference plane which was formed by cutting the end face of the nut (workpiece) in the axial direction so as to be perpendicular to the inner circumferential surface and thereby more accurately identify the position of the recirculation groove.

According to the fourth embodiment, it is possible to provide a method of production of a nut for ball screw use which reduces the deviation of the recirculation grooves and rolling groove in the axial direction.

Below, an example of a method of production of a nut for ball screw use according to the fourth embodiment will be explained while referring to the drawings.

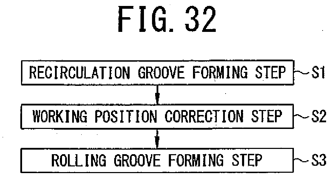

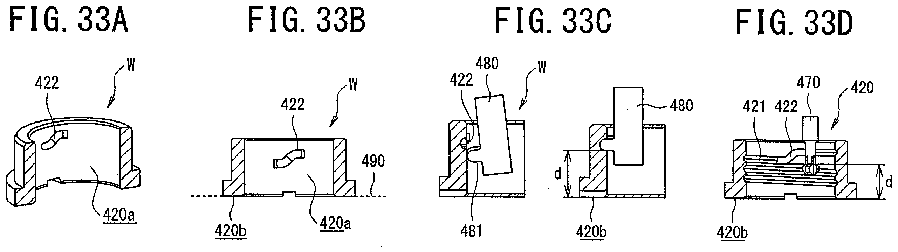

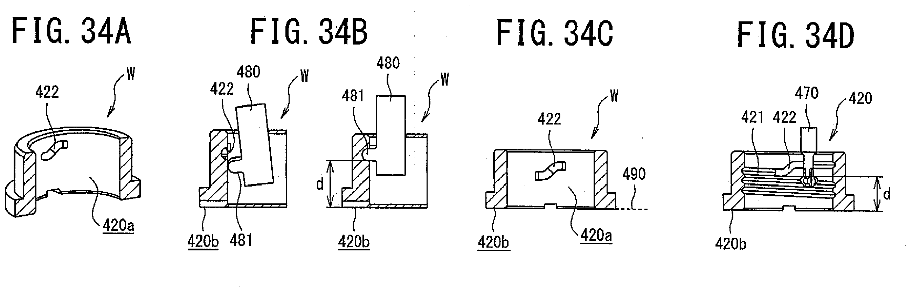

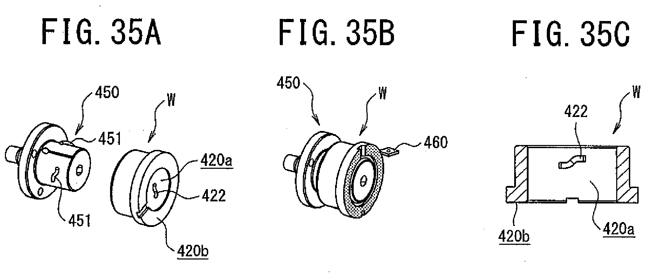

FIG. 32 is a flow chart which shows an example of the method of production of a nut for ball screw use according to the fourth embodiment. Further, FIGS. 33A to 33D are views which show an example of the method of production of a nut for ball screw use according to the fourth embodiment, wherein 33A is a cross-sectional view which shows an outline of a nut on which the recirculation groove forming step is performed, 33B is a cross-sectional view which shows an end face which forms a reference, 33C is a cross-sectional view which shows a working position correction step, and 33D is a cross-sectional view which shows a rolling groove forming step. Further, FIGS. 34A to 34D are views which show a modification of the method of production of a nut for ball screw use according to the fourth embodiment, wherein 34A is a cross-sectional view which shows an outline of a nut on which the recirculation groove forming step is performed, 34B is a cross-sectional view which shows a working position correction step, 34C is a cross-sectional view which shows an end face which forms a reference, and 34D is a cross-sectional view which shows a rolling groove forming step. Furthermore, FIGS. 35A to 35C are views which show a modification of the method of production of a nut for ball screw use according to the fourth embodiment, wherein 35A is a perspective view which shows an outline of a nut on which the recirculation groove forming step is performed and a chuck device, 35B is a perspective view which shows a working reference plane forming step, and 35C is a cross-sectional view which shows a working reference plane.

The constitution and operation of the ball screw which has a nut which was fabricated by the method of production of a nut for ball screw use according to the fourth embodiment are similar to those of the ball screw according to the first embodiment which is explained using FIGS. 1 to 3, so the explanation will be omitted.

This method of production of a nut for ball screw use, as shown in FIG. 32, includes a recirculation groove forming step S1, a working position correction step S2, and a rolling groove forming step S3. Note that, in the following explanation, the working of the rolling groove in the rolling groove forming step will be explained limited to cutting, but it is preferable to similarly perform grinding as the finishing of the rolling groove.

### <Recirculation Groove Forming Step>

The recirculation groove forming step is a step of forming recirculation grooves in the inner circumferential surface of a hollow cylindrical worked object by plastic working.

Specifically, first, a blank which was formed with a flange 423 at the previous step, that is, a hollow cylindrical worked object (below, referred to as the "workpiece") W, is formed with a plurality of recirculation grooves 422, 422 at the inner circumferential surface 420a of the workpiece W by plastic working. Note that, for example, as shown in FIG. 6B, it is also possible to use a die which is provided with a cam mechanism for plastic working so as to form the recirculation grooves 422.

### <Working Position Correction Step>

The working position correction step is the step of using the positions of the recirculation grooves 422 of the workpiece W which was set at the fixture as the basis to correct the working position of the cutting tool 470 before the rolling groove forming step. Specifically, first, in the above-mentioned recirculation groove forming step, the inner circumferential surface 420a is formed with the recirculation grooves 422 (FIG. 33A) and the end face 420b of the workpiece W (nut 420) in the axial direction is made to abut against the fixture reference plane 490 to grip it (FIG. 33B). This end face 420b becomes the reference plane for identifying the positions of the recirculation grooves.

After that, the positions of the recirculation grooves 422 of the workpiece W which is set in the fixture are measured by the recirculation groove position measuring means 480 (FIG. 33C). The control means for controlling the cutting tool 470 and recirculation groove position measuring means 480 (not shown) uses the results of measurement as the basis to judge whether to correct the position of the cutting tool 470 in the rolling groove forming step and if correction is necessary uses the obtained results of measurement as the basis to perform the rolling groove forming step on the workpiece W (this point will be explained later)).

Here, in correcting the position of the cutting tool, what are corrected are the origin coordinate values, working position, cutting tool length correction value, etc. On the other hand, if the result of judgment is that correction is not required, the rolling groove forming step is performed on the above-mentioned workpiece W. Here, the recirculation groove position measuring means 480 has a probe 481 of a shape which mates with a recirculation groove 422 (see FIG. 33C) . At the working position correction step, using the movement of this probe 481, the distance "d" from the end face 420b to a recirculation groove 422 is measured and whether correction is required or not is judged by a not shown control means.

### <Rolling Groove Forming Step>

The rolling groove forming step is a step which forms a rolling groove 421 at the inner circumferential surface 420a at which the recirculation grooves 422 are formed. Specifically, first, the conveyance chuck device (not shown) grips the workpiece W and in that state makes the end face 420b abut against the fixture reference plane 490 (FIG. 33D) . At this time, information which relates to the positions of the recirculation grooves 422 at the conveyance chuck device and the position of the conveyance chuck device with respect to the fixture reference plane 490 is sent to a not shown control device. This control device is used to calculate the distance between the fixture reference plane 490 and the recirculation grooves 422.

Here, "the positions of the recirculation grooves 422 in the conveyance chuck device" are identified from the directions and distances of positioning of the mating parts (not shown) of the conveyance chuck device which was mated with the recirculation grooves 422 using as a reference a reference position of the conveyance chuck device (for example, surface facing fixture reference plane 490). Further, the "position of the conveyance chuck device with respect to the fixture reference plane 490" is identified from the direction and distance of positioning of the fixture reference plane 490 using as a reference the reference position (for example, surface facing fixture reference plane 490) . Further, from these results of calculation, the positions of the recirculation grooves 422 with respect to the fixture reference plane 490 are identified, so the rolling groove 421 is formed by cutting using a cutting tool 470 from the identified positions on the inner circumferential surface 420a of the workpiece W.

Here, as a modification of the fourth embodiment, as shown in FIGS. 34A to 34D, the timing for performing the working position correction step may also be changed. Specifically, first, as explained above, before the workpiece W which formed with the recirculation grooves 422 at its inner circumferential surface 420a (FIG. 34A) is supplied to the processing machine, the recirculation groove position measuring means 480 is used to measure the distance "d" from the end face 420b to a recirculation groove 422 (FIG. 34B). After that, the workpiece W is gripped while making the end face 420b abut against the fixture reference plane 490 (FIG. 34C).

The control means for controlling the cutting tool 470 and recirculation groove position measuring means 480 (not shown) uses the results of measurement as the basis to judge whether to correct the position of the cutting tool 470 in the rolling groove forming step and if correction is necessary uses the obtained results of measurement as the basis to perform the rolling groove forming step on the workpiece W (FIG. 34D). Here, in correcting the position of the cutting tool, what are corrected are the origin coordinate values, working position, cutting tool length correction value, etc. On the other hand, if the result of judgment is that correction is not required, the rolling groove forming step is performed on the above-mentioned workpiece W.

Note that, the type of the cutting tool which forms the rolling groove 421 is not particularly limited, but it is possible to use the one which was used in the first or second embodiment (spiral cutters 120 and 214 and cutting tools 215 and 216) . Further, the workpiece W after the rolling groove forming step etc. using cutting may also be treated at the rolling groove or other required locations by the desired heat treatment.

### [Working Reference Plane Forming Step]

Further, as another modification of the fourth embodiment, as shown in FIGS. 35A to 35C, a working reference plane forming step may also be included.

The working reference plane forming step is a step, after the recirculation groove forming step, of cutting the end face of the workpiece W in the axial direction to form a working reference plane which is perpendicular to the inner circumferential surface. Specifically, as shown in FIG. 35A, after the recirculation groove forming step, first, a chuck device 450 is used to grip the workpiece W. The chuck device 450 is, for example, a chuck device of the internal collet type. In the recirculation groove forming step, there are mating parts 451 and 451 which mate with recirculation grooves 422, 422 which are formed at the inner circumference 420a of the workpiece W. Note that, the chuck device 450 may also be an internal three-jaw type chuck device in addition to an internal collet type chuck device.

The workpiece W is held by the chuck device 450 directly gripping the recirculation grooves 450 by a collet mechanism which uses the mating parts 451 and 451 and in that state is cut at the end face 420b of the workpiece W in the axial direction by the cutting tool 460 (FIG. 35B). The thus cut end face 420b is made the working reference plane 420b which is perpendicular to the inner circumferential surface 420a (see FIG. 35C). Note that, in the above example, the chuck device 450 was provided with mating parts 451 which comprise convex parts which mate with the recirculation grooves 422, but if it is possible to grip the workpiece W, it is also possible to use a chuck device which is not provided with convex parts.

For example, it is also possible to combine the work position correction step with the rolling groove forming step of the first embodiment or second embodiment.

As explained above, according to the fourth embodiment, in the rolling groove forming step, the rolling groove 421 is formed with reference to the end face (working reference plane) 420b which is formed so as to be perpendicular to the inner circumferential surface 420a. That is, the workpiece W which is gripped with the end face (working reference plane) 420b abutting against the fixture reference plane 490 is formed with the rolling groove 421 in a state with reduced deviation of the recirculation grooves 422 in the axial direction with respect to the machining origin of the cutting machine.

Therefore, it is possible to provide a method of production of a nut for ball screw use which reduces the deviation of the recirculation grooves and rolling groove in the axial direction.

Above, examples of a method of production of a nut for ball screw use according to a fourth embodiment were explained, but the fourth embodiment is not limited to the above examples. Various modifications are possible within the scope of the claims.

Note that, the first to fourth embodiments illustrate examples of the present invention. The present invention is not limited to the first to fourth embodiments. Various modifications are possible within the scope of the claims. For example, in the recirculation groove forming step, for example, cutting may be used to form the ball recirculation grooves. Further, in the rolling groove forming step, for example, broaching and grinding may be used to form the ball rolling groove. Furthermore, for example, the ball rolling groove etc. may be able to be heat treated under desired conditions, then the ball rolling groove etc. may be finished by grinding. In this case, the working references which are shown in the first to fourth embodiments and the holding members able to set the same are preferably used for finishing.

### Reference Signs List

1 ball screw
3 threaded shaft
3a screw groove
5 nut
5a screw groove
7 ball rolling channel
9 ball
11 ball recirculation channel
20 concave groove
101 blank
101a inner circumferential surface of blank
102 concave part (phase reference)
102a pinhole (phase reference)
102b cut flat (phase reference)
103 ball recirculation groove
104 working head
105 holding member
105a upper side split member of holding member
105b lower side split member of holding member
107 holding member
107a left side split member of holding member
107b right side split member of holding member
108 ball rolling groove
109 holding member
109a to 109c first to third jaws of three-jaw chuck (holding member)
111 flange
111a end face of flange (axial direction reference)
111b outer circumferential surface of flange (radial direction reference)
112 end face of blank
113 chamfered part of one end of blank inner circumferential surface in axial direction
114 chamfered part of other end of blank inner circumferential surface in axial direction
120 spiral cutter
130 chuck
140 cutting tool
141 convex part
142 cutting tool
151 convex part (phase reference setting part)
152 end face (axial direction reference setting part)
153 large diameter inner circumferential surface (radial direction reference setting part)
154 small diameter inner circumferential surface
161 cam driver
161a slanted surface of cam driver
162 cam slider
162a convex part
162b slanted surface of cam slider
171 convex part (phase reference setting part)
172 bottom surface (axial direction reference setting part)
173 large diameter inner circumferential surface (radial direction reference setting part)
174 small diameter inner circumferential surface
191 convex part (phase reference setting part)
192 bottom surface (axial direction reference setting part)
193 inner circumferential surface (radial direction reference setting part)

## Claims

1. A method of production of a nut (5) for ball screw (1) use which produces a nut (5) for ball screw use which is formed at its inner circumferential surface with a ball rolling groove (108) which forms a raceway through which balls (9) are made to roll together with a spiral groove of a threaded shaft (3) and with a ball recirculation groove (103) which returns balls (9) from an end point of the raceway to a starting point, the method comprising:
a blank forming step which forms a tubular blank (101) from a nut blank,
a recirculation groove forming step which forms the ball recirculation groove (103) at the inner circumferential surface (101a) of the blank (101), and
a rolling groove forming step which forms the ball rolling groove (108) at an inner circumferential surface of the blank (101), **characterized in that**
the method forms a working reference by a step before the rolling groove forming step and uses a holding member (105, 107, 109) at which the working reference can be set so as to perform the rolling groove forming step after the recirculation groove forming step,
the working reference includes a phase reference, axial direction reference, and radial direction reference which are formed by the blank forming step and are used in common in the recirculation groove forming step and the rolling groove forming step,
and **in that** in the blank forming step, forming the phase reference at an end face or outer circumferential surface of the blank, continuously finishing the inner circumferential surface and one end face in the axial direction of the blank and an outer circumferential surface which continues from this one end face in the axial direction, using the one end face in the axial direction as the axial direction reference, and using the outer circumferential surface as the radial direction reference.

2. The method of production of a nut (5) for ball screw use as set forth in claim 1, **characterized by** forming the ball recirculation groove (103) in the recirculation groove forming step by plastic working.

3. The method of production of a nut (5) for ball screw use as set forth in claim 2, **characterized by** using a die which is provided with a cam mechanism to perform the plastic working.

4. The method of production of a nut (5) for ball screw use as set forth in any one of claims 1 to 3, **characterized in that** the blank (101) has a flange (111) at one end in the axial direction and by, in the blank forming step, forming the phase reference at an end face or outer circumferential surface of the flange (111).

5. The method of production of a nut (5) for ball screw use as set forth in any one of claims 1 to 4, **characterized by** performing a step of forming chamfered parts (113, 114) at the two ends of the inner circumferential surface of the blank (101) in the axial direction in the state of holding the blank by the holding members (105, 107, 109) which perform the rolling groove forming step.

6. The method of production of a nut (5) for ball screw use as set forth in claim 5, **characterized by**, after finishing the chamfered parts (113, 114), finishing the outer circumferential surface of the blank (101) using such finished chamfered parts as a reference.

7. The method of production of a nut (5) for ball screw use as set forth in any one of claims 1 to 6, **characterized in that** the rolling groove forming step uses a portion not including the portion which forms the ball recirculation groove (103) in the portion provided in the axial direction across the two ends of the blank (101) in the axial direction as the phase reference, fastens the blank (101) in which the ball recirculation groove (103) is formed at a groove forming machine, and uses the groove forming machine to form the ball rolling groove (108) at the inner circumferential surface of the blank (101).

8. The method of production of a nut (5) for ball screw use as set forth in claim 7, **characterized by** using an intermediate portion in the axial direction of the outer circumferential surface of the portion used as the phase reference as the radial direction reference to fasten the blank (101) in which the ball recirculation groove (103) has been formed at the groove forming machine.

9. The method of production of a nut (5) for ball screw use as set forth in claim 7 or 8, **characterized by** using an end face of the blank (101) which forms an end part in the axial direction of the portion used as the phase reference as the axial direction reference to fasten the blank (101) in which the ball recirculation groove (103) has been formed at the groove forming machine.

10. The method of production of a nut (5) for ball screw use as set forth in claim 7, **characterized in that** the phase reference is formed at an end face of the blank (101) and is made a shape which mates with a member at the groove forming machine side.

11. A method of production of a nut (320, 420) for ball screw use which produces a nut (320, 420) for ball screw use which is formed at its inner circumferential surface with a ball rolling groove (108) which forms a raceway through which balls (9) are made to roll together with a spiral groove of a threaded shaft (3) and with a ball recirculation groove (103) which returns balls (9) from an end point of the raceway to a starting point, the method comprising:
a blank forming step which forms a tubular blank (230, W) from a nut blank,
a recirculation groove forming step which forms the ball recirculation groove (103) at the inner circumferential surface (230a, 320a, 420a) of the blank (230, W), and
a rolling groove forming step which forms the ball rolling groove (108) at an inner circumferential surface (230a, 320a, 420a) of the blank (230, W), **characterized in that**
the method forms a working reference by a step before the rolling groove forming step and uses a holding member (202, 390) at which the working reference can be set so as to perform the rolling groove forming step after the recirculation groove forming step,
after the recirculation groove forming step, performing a recirculation groove position identifying step which identifies an axial direction position of the ball recirculation groove (103) with respect to a machining origin for formation of the ball rolling groove (108) in the rolling groove forming step and using the axial direction position of the ball recirculation groove (103) as the basis to form the ball rolling groove (108) of the rolling groove forming step from that position, and
the recirculation groove position identifying step includes a first reference plane forming step which uses a chuck device to directly grip at least the ball recirculation groove (103) and, **in that** state, cuts the end face in the axial direction of the worked object of the blank (230, W) to form a first working reference plane for determining an axial direction end face position of the worked object with respect to the ball recirculation groove (103) and uses the position of the ball recirculation groove (103) at the chuck device and the position of the first working reference plane at the chuck device when making the first working reference plane abut against a fixture reference plane as the basis to identify the position of the ball recirculation groove (103) with respect to the fixture reference plane.

12. The method of production of a nut (320, 420) for ball screw use as set forth in claim 11, **characterized in that** the recirculation groove position identifying step includes, after the first reference plane forming step, a second reference plane forming step which uses the chuck device to directly grip at least the ball recirculation groove (103) and, **in that** state, cuts the outer circumferential surface of the worked object to form a second working reference plane which is coaxial with a PCD center of the ball recirculation groove (103), uses the position of the ball recirculation groove (103) in the chuck device when making the first working reference plane abut against the fixture reference plane and the position of the second working reference plane as the basis to identify the position of the ball recirculation groove (103) with respect to the second working reference plane, and forms the ball rolling groove (108) of the rolling groove forming step from that position.

13. A method of production of a nut (320, 420) for ball screw use which produces a nut (320, 420) for ball screw use which is formed at its inner circumferential surface with a ball rolling groove (108) which forms a raceway through which balls (9) are made to roll together with a spiral groove of a threaded shaft (3) and with a ball recirculation groove (103) which returns balls (9) from an end point of the raceway to a starting point, the method comprising:
a blank forming step which forms a tubular blank (230, W) from a nut blank,
a recirculation groove forming step which forms the ball recirculation groove (103) at the inner circumferential surface (230a, 320a, 420a) of the blank (230, W), and
a rolling groove forming step which forms the ball rolling groove (108) at an inner circumferential surface (230a, 320a, 420a) of the blank (230, W), **characterized in that**
the method forms a working reference by a step before the rolling groove forming step and uses a holding member (202, 390) at which the working reference can be set so as to perform the rolling groove forming step after the recirculation groove forming step,
after the recirculation groove forming step, performing a recirculation groove position identifying step which identifies an axial direction position of the ball recirculation groove (103) with respect to a machining origin for formation of the ball rolling groove (108) in the rolling groove forming step and using the axial direction position of the ball recirculation groove (103) as the basis to form the ball rolling groove (108) of the rolling groove forming step from that position, and
the recirculation groove position identifying step is a step which uses a chuck device of a conveyor system which conveys a worked object of the blank (230, W) to directly grip at least the ball recirculation groove (103) and, **in that** state, positions the worked object so that the ball recirculation groove (103) becomes a predetermined position with respect to the machining origin.

14. A method of production of a nut (320, 420) for ball screw use which produces a nut (320, 420) for ball screw use which is formed at its inner circumferential surface with a ball rolling groove (108) which forms a raceway through which balls (9) are made to roll together with a spiral groove of a threaded shaft and with a ball recirculation groove (103) which returns balls (9) from an end point of the raceway to a starting point, the method comprising:
a blank forming step which forms a tubular blank (230, W) from a nut blank,
a recirculation groove forming step which forms the ball recirculation groove (103) at the inner circumferential surface (230a, 320a, 420a) of the blank (230, W), and
a rolling groove forming step which forms the ball rolling groove (108) at an inner circumferential surface (230a, 320a, 420a) of the blank (230, W), **characterized in that**
the method forms a working reference by a step before the rolling groove forming step and uses a holding member (202, 390) at which the working reference can be set so as to perform the rolling groove forming step after the recirculation groove forming step, and
the rolling groove forming step is a step which cuts an inner circumferential surface of the blank (230, W) using a cutting tool to thereby form the ball rolling groove (108) and
includes a working position correction step which measures a position of the ball recirculation groove (103) using an axial direction end face of the blank (230, W) as an axial direction reference before the rolling groove forming step and which uses the results of measurement as the basis to correct a working position of the cutting tool.

15. The method of production of a nut (320, 420) for ball screw use as set forth in claim 14, **characterized by** including a working reference plane forming step which cuts an axial direction end face of the blank (230, W) so as to be perpendicular to a central axis of the inner circumferential surface to form a working reference plane.

16. The method of production of a nut (320, 420) for ball screw use as set forth in claim 2, **characterized by** forming the working references at the recirculation groove forming step simultaneously with the ball recirculation groove by plastic working.

## Patentansprüche

1. Verfahren zur Herstellung einer Mutter (5) zur Verwendung mit einer Kugelumlaufspindel (1), das eine Mutter (5) für eine Kugelumlaufspindel herstellt, die an ihrer Innenumfangsfläche mit einer Kugelrollnut (108) ausgebildet ist, die eine Laufbahn, durch die Kugeln (9) zusammen zum Rollen gebracht werden, mit einer Spiralnut einer Gewindewelle (3) und mit einer Kugelumlaufnut (103), die Kugeln (9) von einem Endpunkt der Laufbahn zu einem Startpunkt zurückführt, wobei das Verfahren umfasst:
einen Rohlingsbildungsschritt, der einen rohrförmigen Rohling (101) aus einem Mutterrohling bildet,
einen Umlaufnutbildungsschritt, der die Kugelumlaufnut (103) an der Innenumfangsfläche (101a) des Rohlings (101) bildet, und
einen Rollnutbildungsschritt, der die Kugelrollnut (108) an einer Innenumfangsfläche des Rohlings (101) ausbildet, **dadurch gekennzeichnet, dass**
das Verfahren eine Arbeitsreferenz durch einen Schritt vor dem Schritt des Ausbildens der Rollnut bildet und ein Halteelement (105, 107, 109) verwendet, bei dem die Arbeitsreferenz eingestellt werden kann, um den Schritt des Ausbildens der Rollnut nach dem Schritt des Ausbildens der Umlaufnut durchzuführen,
wobei die Arbeitsreferenz eine Phasenreferenz, eine Axialrichtungsreferenz und eine Radialrichtungsreferenz enthält, die durch den Rohlingsbildungsschritt gebildet werden und gemeinsam in dem Umlaufnutbildungsschritt und dem Rollnutbildungsschritt verwendet werden.
und dadurch, dass in dem Rohlingsbildungsschritt, der die Phasenreferenz an einer Endfläche oder Außenumfangsfläche des Rohlings bildet, die Innenumfangsfläche und eine Endfläche in der axialen Richtung des Rohlings und eine Außenumfangsfläche, die sich von dieser einen Endfläche in der axialen Richtung fortsetzt, kontinuierlich fertiggestellt werden, wobei die eine Endfläche in der axialen Richtung als die axiale Richtungsreferenz verwendet wird und die äußere Umfangsfläche als die radiale Richtungsreferenz verwendet wird.

2. Verfahren zur Herstellung einer Mutter (5) zur Verwendung mit einer Kugelumlaufspindel nach Anspruch 1, **dadurch gekennzeichnet, dass** die Kugelumlaufnut (103) in dem Umlaufnutbildungsschritt durch plastische Bearbeitung gebildet wird.

3. Verfahren zur Herstellung einer Mutter (5) zur Verwendung mit einer Kugelumlaufspindel nach Anspruch 2, **gekennzeichnet durch** die Verwendung einer Matrize, die mit einem Nockenmechanismus versehen ist, um die plastische Bearbeitung durchzuführen.

4. Verfahren zur Herstellung einer Mutter (5) zur Verwendung mit einer Kugelumlaufspindel nach einem der Ansprüche 1 bis 3, **dadurch gekennzeichnet, dass** der Rohling (101) einen Flansch (111) an einem Ende in axialer Richtung aufweist und durch Bilden der Phasenreferenz in dem Rohlingsbildungsschritt an einer Endfläche oder Außenumfangsfläche des Flansches (111).

5. Verfahren zur Herstellung einer Mutter (5) zur Verwendung mit einer Kugelumlaufspindel nach einem der Ansprüche 1 bis 4, **gekennzeichnet durch** einen Schritt des Bildens abgeschrägter Teile (113, 114) an den beiden Enden der Innenumfangsfläche des Rohlings (101) in der axialen Richtung in dem Zustand des Haltens des Rohlings durch die Halteelemente (105, 107, 109), die den Rollnutbildungsschritt ausführen.

6. Verfahren zur Herstellung einer Mutter (5) zur Verwendung mit einer Kugelumlaufspindel nach Anspruch 5, **gekennzeichnet durch** Fertigstellung der Außenumfangsfläche des Rohlings (101), nach Fertigstellung der abgeschrägten Teile (113, 114) mit solchen fertig abgeschrägten Teilen als Referenz.

7. Verfahren zur Herstellung einer Mutter (5) zur Verwendung mit einer Kugelumlaufspindel nach einem der Ansprüche 1 bis 6, **dadurch gekennzeichnet, dass** der Schritt zum Ausbilden der Rollnut einen Abschnitt, der nicht den Abschnitt enthält, der die Kugelumlaufnut (103) bildet in dem Abschnitt verwendet, der in axialer Richtung über die beiden Enden des Rohlings (101) in axialer Richtung als Phasenreferenz vorgesehen ist, den Rohling (101) befestigt, in dem die Kugelumlaufnut (103) an einer Nutbildungsmaschine ausgebildet wird und die Nutbildungsmaschine verwendet, um die Kugelrollnut (108) an der Innenumfangsfläche des Rohlings (101) auszubilden.

8. Verfahren zur Herstellung einer Mutter (5) zur Verwendung mit einer Kugelumlaufspindel nach Anspruch 7, **dadurch gekennzeichnet, dass** ein Zwischenabschnitt in der axialen Richtung der Außenumfangsfläche des Abschnitts, der als Phasenreferenz verwendet wird, als Radialrichtungsreferenz verwendet wird zum Befestigen des Rohlings (101), in dem die Kugelumlaufnut (103) an der Nutbildungsmaschine ausgebildet wurde.

9. Verfahren zur Herstellung einer Mutter (5) zur Verwendung mit einer Kugelumlaufspindel nach Anspruch 7 oder 8, **dadurch gekennzeichnet, dass** eine Endfläche des Rohlings (101), die in axialer Richtung des Abschnitts ein Endteil bildet, der als Phasenreferenz verwendet wird, als Axialrichtungsreferenz zum Befestigen des Rohlings (101) verwendet wird, in dem die Kugelumlaufnut (103) an der Nutbildungsmaschine ausgebildet wurde.

10. Verfahren zur Herstellung einer Mutter (5) zur Verwendung mit einer Kugelumlaufspindel nach Anspruch 7, **dadurch gekennzeichnet, dass** die Phasenreferenz an einer Endfläche des Rohlings (101) ausgebildet und in eine Form gebracht wird, die mit einem Element an der Seite der Nutbildungsmaschine übereinstimmt.

11. Verfahren zur Herstellung einer Mutter (320, 420) zur Verwendung mit einer Kugelumlaufspindel, das eine Mutter (320, 420) zur Verwendung mit einer Kugelumlaufspindel erzeugt, die an ihrer Innenumfangsfläche mit einer Kugelrollnut (108) ausgebildet ist, die eine Laufbahn, durch die Kugeln (9) zusammen zum Rollen gebracht werden, mit einer Spiralnut einer Gewindewelle (3) und mit einer Kugelumlaufnut (103), die Kugeln (9) von einem Endpunkt der Laufbahn zu einem Startpunkt zurückführt, wobei das Verfahren umfasst:
einen Rohlingbildungsschritt, der einen rohrförmigen Rohling (230, W) aus einem Mutterrohling bildet,
einen Umlaufnutbildungsschritt, der die Kugelumlaufnut (103) an der Innenumfangsfläche (230a, 320a, 420a) des Rohlings (230, W) bildet, und
einen Rollnutbildungsschritt, der die Kugelrollnut (108) an einer Innenumfangsfläche (230a, 320a, 420a) des Rohlings (230, W) ausbildet, **dadurch gekennzeichnet, dass**
das Verfahren eine Arbeitsreferenz durch einen Schritt vor dem Schritt des Ausbildens der Rollnut bildet und ein Halteelement (202, 390) verwendet, bei dem die Arbeitsreferenz eingestellt werden kann, um den Schritt des Ausbildens der Rollnut nach dem Schritt des Ausbildens der Umlaufnut durchzuführen,
Ausführen eines Umlaufnutpositionsidentifizierungsschritts nach dem Schritt des Ausbildens der Umlaufnut, der eine axiale Richtungsposition der Kugelumlaufnut (103) in Bezug auf einen Bearbeitungsursprung zum Ausbilden der Kugelrollnut (108) in dem Umlaufnutbildungsschritt identifiziert und Verwenden der Axialrichtungsposition der Kugelumlaufnut (103) als Basis, um die Kugelrollnut (108) des Rollnutbildungsschritts von dieser Position aus zu bilden, und
der Umlaufnutpositionsidentifizierungsschritt einen ersten Referenzebenenbildungsschritt umfasst, der eine Spannvorrichtung verwendet, um zumindest die Kugelumlaufnut (103) direkt zu greifen und in diesem Zustand die Endfläche in der axialen Richtung des bearbeiteten Objekts des Rohlings (230, W) schneidet, um eine erste Arbeitsreferenzebene zum Bestimmen einer axialen Endflächenposition des bearbeiteten Objekts in Bezug auf die Kugelumlaufnut (103) zu bilden, und die Position der Kugelumlaufnut (103) an der Spannvorrichtung verwendet und die Position der ersten Arbeitsreferenzebene an der Spannvorrichtung verwendet, wenn die erste Arbeitsreferenzebene gegen eine Befestigungsreferenzebene zur Anlage gebracht wird, als Grundlage zum Identifizieren der Position der Kugelumlaufnut (103) in Bezug auf die Befestigungsreferenzebene.

12. Verfahren zur Herstellung einer Mutter (320, 420) zur Verwendung als Kugelumlaufspindel nach Anspruch 11, **dadurch gekennzeichnet, dass** der Umlaufnutpositionsidentifizierungsschritt nach dem ersten Referenzebenenbildungsschritt einen zweiten Referenzebenenbildungsschritt umfasst, der die Spannvorrichtung verwendet, um zumindest die Kugelumlaufnut (103) direkt zu ergreifen, und in diesem Zustand die Außenumfangsfläche des bearbeiteten Objekts schneidet, um eine zweite Arbeitsreferenzebene zu bilden, die koaxial zu einer PCD-Mitte der Kugelumlaufnut (103) ist, die Position der Kugelrückführnut (103) in der Spannvorrichtung verwendet, wenn die erste Arbeitsreferenzebene gegen die Vorrichtungsreferenzebene zur Anlage gebracht wird, und die Position der zweiten Arbeitsreferenzebene als Grundlage zum Identifizieren der Position von die Kugelumlaufnut (103) in Bezug auf die zweite Arbeitsreferenzebene verwendet und die Kugelrollnut (108) des Rollnutbildungsschritts von dieser Position aus bildet.

13. Verfahren zur Herstellung einer Mutter (320, 420) zur Verwendung mit einer Kugelumlaufspindel, das eine Mutter (320, 420) zur Verwendung mit einer Kugelumlaufspindel erzeugt, die an ihrer Innenumfangsfläche mit einer Kugelrollnut (108) ausgebildet ist, die eine Laufbahn, durch die Kugeln (9) zusammen zum Rollen gebracht werden, mit einer Spiralnut einer Gewindewelle (3) und mit einer Kugelumlaufnut (103), die Kugeln (9) von einem Endpunkt der Laufbahn zu einem Startpunkt zurückführt, wobei das Verfahren umfasst:
einen Rohlingsbildungsschritt, der einen rohrförmigen Rohling (230, W) aus einem Mutterrohling bildet,
einen Umlaufnutbildungsschritt, der die Kugelumlaufnut (103) an der Innenumfangsfläche (230a, 320a, 420a) des Rohlings (230, W) bildet, und
einen Rollnutbildungsschritt, der die Kugelrollnut (108) an einer Innenumfangsfläche (230a, 320a, 420a) des Rohlings (230, W) ausbildet, **dadurch gekennzeichnet, dass**
das Verfahren eine Arbeitsreferenz durch einen Schritt vor dem Schritt des Ausbildens der Rollnut bildet und ein Halteelement (202, 390) verwendet, bei dem die Arbeitsreferenz eingestellt werden kann, um den Schritt des Ausbildens der Rollnut nach dem Schritt des Ausbildens der Umlaufnut durchzuführen,
Ausführen eines Umlaufnutpositionsidentifizierungsschritts nach dem Schritt des Ausbildens der Umlaufnut, der eine axiale Richtungsposition der Kugelumlaufnut (103) in Bezug auf einen Bearbeitungsursprung zum Ausbilden der Kugelrollnut (108) in dem Umlaufnutbildungsschritt identifiziert und Verwenden der Axialrichtungsposition der Kugelumlaufnut (103) als Basis, um die Kugelrollnut (108) des Rollnutbildungsschritts von dieser Position aus zu bilden, und
der Umlaufnutpositionsidentifizierungsschritt ein Schritt ist, der eine Spannvorrichtung eines Fördersystems verwendet, das einen bearbeiteten Gegenstand des Zuschnitts (230, W) befördert, um zumindest die Kugelumlaufnut (103) direkt zu ergreifen und in diesem Zustand das bearbeitete Objekt, so positioniert, dass die Kugelumlaufnut (103) eine vorbestimmte Position in Bezug auf den Bearbeitungsursprung einnimmt.

14. Verfahren zur Herstellung einer Mutter (320, 420) zur Verwendung mit einer Kugelumlaufspindel, das eine Mutter (320, 420) zur Verwendung mit einer Kugelumlaufspindel erzeugt, die an ihrer Innenumfangsfläche mit einer Kugelrollnut (108) ausgebildet ist, die eine Laufbahn, durch die Kugeln (9) zusammen zum Rollen gebracht werden, mit einer Spiralnut einer Gewindewelle (3) und mit einer Kugelumlaufnut (103), die Kugeln (9) von einem Endpunkt der Laufbahn zu einem Startpunkt zurückführt, wobei das Verfahren umfasst:
einen Rohlingsbildungsschritt, der einen rohrförmigen Rohling (230, W) aus einem Mutterrohling bildet,
einen Umlaufnutbildungsschritt, der die Kugelumlaufnut (103) an der Innenumfangsfläche (230a, 320a, 420a) des Rohlings (230, W) bildet, und
einen Rollnutbildungsschritt, der die Kugelrollnut (108) an einer Innenumfangsfläche (230a, 320a, 420a) des Rohlings (230, W) ausbildet, **dadurch gekennzeichnet, dass**
das Verfahren eine Arbeitsreferenz durch einen Schritt vor dem Schritt des Ausbildens der Rollnut bildet und ein Halteelement (202, 390) verwendet, bei dem die Arbeitsreferenz eingestellt werden kann, um den Schritt des Ausbildens der Rollnut nach dem Schritt des Ausbildens der Umlaufnut durchzuführen, und
der Rollnutbildungsschritt ein Schritt ist, der eine Innenumfangsfläche des Rohlings (230, W) unter Verwendung eines Schneidwerkzeugs schneidet, um dadurch die Kugelrollnut (108) auszubilden, und
einen Arbeitspositionskorrekturschritt umfasst, der eine Position der Kugelumlaufnut (103) unter Verwendung einer axialen Endfläche des Rohlings (230, W) als axiale Richtungsreferenz vor dem Rollnutbildungsschritt misst und der die Messergebnisse verwendet als Grundlage zur Korrektur einer Arbeitsposition des Schneidwerkzeugs.

15. Verfahren zur Herstellung einer Mutter (320, 420) zur Verwendung mit einer Kugelumlaufspindel nach Anspruch 14, **gekennzeichnet durch** Enthalten eines Schritts zum Ausbilden einer Arbeitsreferenzebene, der eine in Axialrichtungsendfläche des Rohlings (230, W) schneidet, um senkrecht zu einer Mittelachse der Innenumfangsfläche zu sein, um eine Arbeitsreferenzebene zu bilden.

16. Verfahren zur Herstellung einer Mutter (320, 420) zur Verwendung mit einer Kugelumlaufspindel nach Anspruch 2, **dadurch gekennzeichnet, dass** die Arbeitsreferenzen im Schritt des Ausbildens der Umlaufnut gleichzeitig mit der Umlaufnut der Kugel durch plastisches Bearbeiten ausgebildet werden.

## Revendications

1. Procédé de production d'un écrou (5) pour vis à billes (1) qui produit un écrou (5) pour vis à billes qui est formé au niveau de sa surface circonférentielle intérieure avec une rainure de roulement de billes (108) qui forme un chemin de roulement à travers lequel des billes (9) sont amenées à rouler conjointement à une rainure en spirale d'une tige filetée (3) et avec une rainure de recirculation de billes (103) qui renvoie des billes (9) depuis un point d'extrémité du chemin de roulement jusqu'à un point de départ, le procédé comprenant :
une étape de formation de pièce brute qui forme une pièce brute tubulaire (101) à partir d'une pièce brute d'écrou,
une étape de formation de rainure de recirculation qui forme la rainure de recirculation de billes (103) au niveau de la surface circonférentielle intérieure (101a) de la pièce brute (101), et
une étape de formation de rainure de roulement qui forme la rainure de roulement de billes (108) au niveau d'une surface circonférentielle intérieure de la pièce brute (101),
**caractérisé en ce que**
le procédé forme une référence de travail par une étape avant l'étape de formation de rainure de roulement et utilise un organe de maintien (105, 107, 109) au niveau duquel la référence de travail peut être installée de façon à réaliser l'étape de formation de rainure de roulement après l'étape de formation de rainure de recirculation,
la référence de travail inclut une référence de phase, une référence de direction axiale, et une référence de direction radiale qui sont formées par l'étape de formation de pièce brute et sont utilisées en commun dans l'étape de formation de rainure de recirculation et l'étape de formation de rainure de roulement,
et par, dans l'étape de formation de pièce brute, la formation de la référence de phase au niveau d'une face d'extrémité ou d'une surface circonférentielle extérieure de la pièce brute, la finition en continu de la surface circonférentielle intérieure et d'une face d'extrémité dans la direction axiale de la pièce brute et d'une surface circonférentielle extérieure qui se poursuit depuis cette face d'extrémité dans la direction axiale, à l'aide de la face d'extrémité dans la direction axiale en tant que référence de direction axiale, et à l'aide de la surface circonférentielle extérieure en tant que référence de direction radiale.

2. Procédé de production d'un écrou (5) pour vis à billes selon la revendication 1, **caractérisé par** la formation de la rainure de recirculation de billes (103) dans l'étape de formation de rainure de recirculation par un travail plastique.

3. Procédé de production d'un écrou (5) pour vis à billes selon la revendication 2, **caractérisé par** l'utilisation d'une matrice qui est pourvue d'un mécanisme de came pour réaliser le travail plastique.

4. Procédé de production d'un écrou (5) pour vis à billes selon l'une quelconque des revendications 1 à 3, **caractérisé en ce que** la pièce brute (101) comporte une bride (111) au niveau d'une extrémité dans la direction axiale et par, dans l'étape de formation de pièce brute, la formation de la référence de phase au niveau d'une face d'extrémité ou d'une surface circonférentielle extérieure de la bride (111).

5. Procédé de production d'un écrou (5) pour vis à billes selon l'une quelconque des revendications 1 à 4, **caractérisé par** la réalisation d'une étape de formation de parties chanfreinées (113, 114) au niveau des deux extrémités de la surface circonférentielle intérieure de la pièce brute (101) dans la direction axiale dans l'état de maintien de la pièce brute par les organes de maintien (105, 107, 109) qui réalisent l'étape de formation de rainure de roulement.

6. Procédé de production d'un écrou (5) pour vis à billes selon la revendication 5, **caractérisé par**, après la finition des parties chanfreinées (113, 114), la finition de la surface circonférentielle extérieure de la pièce brute (101) à l'aide de ces parties chanfreinées finies en tant que référence.

7. Procédé de production d'un écrou (5) pour vis à billes selon l'une quelconque des revendications 1 à 6, **caractérisé en ce que** l'étape de formation de rainure de roulement utilise une portion n'incluant pas la portion qui forme la rainure de recirculation de billes (103) dans la portion prévue dans la direction axiale à travers les deux extrémités de la pièce brute (101) dans la direction axiale en tant que référence de phase, fixe la pièce brute (101) dans laquelle la rainure de recirculation de billes (103) est formée au niveau d'une machine de formation de rainure, et utilise la machine de formation de rainure pour former la rainure de roulement de billes (108) au niveau de la surface circonférentielle intérieure de la pièce brute (101).

8. Procédé de production d'un écrou (5) pour vis à billes selon la revendication 7, **caractérisé par** l'utilisation d'une portion intermédiaire dans la direction axiale de la surface circonférentielle extérieure de la portion utilisée en tant que référence de phase en tant que référence de direction radiale pour fixer la pièce brute (101) dans laquelle la rainure de recirculation de billes (103) a été formée au niveau de la machine de formation de rainure.

9. Procédé de production d'un écrou (5) pour vis à billes selon la revendication 7 ou 8, **caractérisé par** l'utilisation d'une face d'extrémité de la pièce brute (101) qui forme une partie d'extrémité dans la direction axiale de la portion utilisée en tant que référence de phase en tant que référence de direction axiale pour fixer la pièce brute (101) dans laquelle la rainure de recirculation de billes (103) a été formée au niveau de la machine de formation de rainure.

10. Procédé de production d'un écrou (5) pour vis à billes selon la revendication 7, **caractérisé en ce que** la référence de phase est formée au niveau d'une face d'extrémité de la pièce brute (101) et pourvue d'une forme qui s'accouple avec un organe du côté machine de formation de rainure.

11. Procédé de formation d'un écrou (320, 420) pour vis à billes qui produit un écrou (320, 420) pour vis à billes qui est formé au niveau de sa surface circonférentielle intérieure avec une rainure de roulement de billes (108) qui forme un chemin de roulement à travers lequel des billes (9) sont amenées à rouler conjointement à une rainure en spirale d'une tige filetée (3) et avec une rainure de recirculation de billes (103) qui renvoie des billes (9) depuis un point d'extrémité du chemin de roulement jusqu'à un point de départ, le procédé comprenant :
une étape de formation de pièce brute qui forme une pièce brute tubulaire (230, W) à partir d'une pièce brute d'écrou,
une étape de formation de rainure de recirculation qui forme la rainure de recirculation de billes (103) au niveau de la surface circonférentielle intérieure (230a, 320a, 420a) de la pièce brute (230, W), et
une étape de formation de rainure de roulement qui forme la rainure de roulement de billes (108) au niveau d'une surface circonférentielle intérieure (230a, 320a, 420a) de la pièce brute (230, W), **caractérisé en ce que**
le procédé forme une référence de travail par une étape avant l'étape de formation de rainure de roulement et utilise un organe de maintien (202, 390) au niveau duquel la référence de travail peut être installée de façon à réaliser l'étape de formation de rainure de roulement après l'étape de formation de rainure de recirculation,
après l'étape de formation de rainure de recirculation, la réalisation d'une étape d'identification de position de rainure de recirculation qui identifie une position de direction axiale de la rainure de recirculation de billes (103) par rapport à une origine d'usinage pour former la rainure de roulement de billes (108) dans l'étape de formation de rainure de roulement et l'utilisation de la position de direction axiale de la rainure de recirculation de billes (103) en tant que base pour former la rainure de roulement de billes (108) de l'étape de formation de rainure de roulement à partir de cette position, et
l'étape d'identification de position de rainure de recirculation inclut une première étape de formation de plan de référence qui utilise un dispositif mandrin pour saisir directement au moins la rainure de recirculation de billes (103) et, dans cet état, découpe la face d'extrémité dans la direction axiale de l'objet travaillé de la pièce brute (230, W) pour former un premier plan de référence de travail afin de déterminer une position de face d'extrémité de direction axiale de l'objet travaillé par rapport à la rainure de recirculation de billes (103) et utilise la position de la rainure de recirculation de billes (103) au niveau du dispositif mandrin et la position du premier plan de référence de travail au niveau du dispositif mandrin lorsqu'on amène le premier plan de référence de travail à buter contre un plan de référence de montage en tant que base pour identifier la position de la rainure de recirculation de billes (103) par rapport au plan de référence de montage.

12. Procédé de production d'un écrou (320, 420) pour vis à billes selon la revendication 11, **caractérisé en ce que** l'étape d'identification de position de rainure de recirculation inclut, après la première étape de formation de plan de référence, une seconde étape de formation de plan de référence qui utilise le dispositif mandrin pour saisir directement au moins la rainure de recirculation de billes (103) et, dans cet état, découpe la surface circonférentielle extérieure de l'objet travaillé pour former un second plan de référence de travail qui est coaxial à un centre PCD de la rainure de recirculation de billes (103), utilise la position de la rainure de recirculation de billes (103) dans le dispositif mandrin lorsqu'on amène le premier plan de référence de travail à buter contre le plan de référence de montage et la position du second plan de référence de travail en tant que base pour identifier la position de la rainure de recirculation de billes (103) par rapport au second plan de référence de travail, et forme la rainure de roulement de billes (108) de l'étape de formation de rainure de roulement à partir de cette position.

13. Procédé de production d'un écrou (320, 420) pour vis à billes qui produit un écrou (320, 420) pour vis à billes qui est formé au niveau de sa surface circonférentielle intérieure avec une rainure de roulement de billes (108) qui forme un chemin de roulement à travers lequel des billes (9) sont amenées à rouler conjointement à une rainure en spirale d'une tige filetée (3) et avec une rainure de recirculation de billes (103) qui renvoie des billes (9) depuis un point d'extrémité du chemin de roulement jusqu'à un point de départ, le procédé comprenant :
une étape de formation de pièce brute qui forme une pièce brute tubulaire (230, W) à partir d'une pièce brute d'écrou,
une étape de formation de rainure de recirculation qui forme la rainure de recirculation de billes (103) au niveau de la surface circonférentielle intérieure (230a, 320a, 420a) de la pièce brute (230, W), et
une étape de formation de rainure de roulement qui forme la rainure de roulement de billes (108) au niveau d'une surface circonférentielle intérieure (230a, 320a, 420a) de la pièce brute (230, W), **caractérisé en ce que**
le procédé forme une référence de travail par une étape avant l'étape de formation de rainure de roulement et utilise un organe de maintien (202, 390) au niveau duquel la référence de travail peut être installée de façon à réaliser l'étape de formation de rainure de roulement après l'étape de formation de rainure de recirculation,
après l'étape de formation de rainure de recirculation, la réalisation d'une étape d'identification de position de rainure de recirculation qui identifie une position de direction axiale de la rainure de recirculation de billes (103) par rapport à une origine d'usinage pour former la rainure de roulement de billes (108) dans l'étape de formation de rainure de roulement et l'utilisation de la position de direction axiale de la rainure de recirculation de billes (103) en tant que base pour former la rainure de roulement de billes (108) de l'étape de formation de rainure de roulement à partir de cette position, et
l'étape d'identification de position de rainure de recirculation est une étape qui utilise un dispositif mandrin d'un système transporteur qui transporte un objet travaillé de la pièce brute (230, W) pour saisir directement au moins la rainure de recirculation de billes (103) et, dans cet état, positionne l'objet travaillé de sorte que la rainure de recirculation de billes (103) devienne une position prédéterminée par rapport à l'origine d'usinage.

14. Procédé de production d'un écrou (320, 420) pour vis à billes qui produit un écrou (320, 420) pour vis à billes qui est formé au niveau de sa surface circonférentielle intérieure avec une rainure de roulement de billes (108) qui forme un chemin de roulement à travers lequel des billes (9) sont amenées à rouler conjointement à une rainure en spirale d'une tige filetée et avec une rainure de recirculation de billes (103) qui renvoie des billes (9) depuis un point d'extrémité du chemin de roulement jusqu'à un point de départ, le procédé comprenant :
une étape de formation de pièce brute qui forme une pièce brute tubulaire (230, W) à partir d'une pièce brute d'écrou,
une étape de formation de rainure de recirculation qui forme la rainure de recirculation de billes (103) au niveau de la surface circonférentielle intérieure (230a, 320a, 420a) de la pièce brute (230, W), et
une étape de formation de rainure de roulement qui forme la rainure de roulement de billes (108) au niveau d'une surface circonférentielle intérieure (230a, 320a, 420a) de la pièce brute (230, W), **caractérisé en ce que**
le procédé forme une référence de travail par une étape avant l'étape de formation de rainure de roulement et utilise un organe de maintien (202, 390) au niveau duquel la référence de travail peut être installée de façon à réaliser l'étape de formation de rainure de roulement après l'étape de formation de rainure de recirculation, et
l'étape de formation de rainure de roulement est une étape qui découpe une surface circonférentielle intérieure de la pièce brute (230, W) à l'aide d'un outil coupant pour former ainsi la rainure de roulement de billes (108) et
inclut une étape de correction de position de travail qui mesure une position de la rainure de recirculation de billes (103) à l'aide d'une face d'extrémité de direction axiale de la pièce brute (230, W) en tant que référence de direction axiale avant l'étape de formation de rainure de roulement et qui utilise les résultats de mesure en tant que base pour corriger une position de travail de l'outil coupant.

15. Procédé de production d'un écrou (320, 420) pour vis à billes selon la revendication 14, **caractérisé en ce qu'**il inclut une étape de formation de plan de référence de travail qui découpe une face d'extrémité de direction axiale de la pièce brute (230, W) de façon à être perpendiculaire à un axe central de la surface circonférentielle intérieure pour former un plan de référence de travail.

16. Procédé de production d'un écrou (320, 420) pour vis à billes selon la revendication 2, **caractérisé par** la formation des références de travail à l'étape de formation de rainure de recirculation simultanément à la rainure de recirculation de billes par un travail plastique.
